(19) **Europäisches Patentamt / European Patent Office / Office européen des brevets**

(11) **EP 4 548 345 B1**

(12) # EUROPEAN PATENT SPECIFICATION

(45) Date of publication and mention
of the grant of the patent:
**05.08.2026 Bulletin 2026/32**

(21) Application number: **23744973.1**

(22) Date of filing: **30.06.2023**

(51) International Patent Classification (IPC):
**G10L 21/0308** (2013.01)     **G06N 3/08** (2023.01)
**G10L 25/30** (2013.01)     **G06N 3/0442** (2023.01)
**G06N 3/045** (2023.01)     **G06N 3/0464** (2023.01)

(52) Cooperative Patent Classification (CPC):
**G10L 21/0308; G06N 3/08; G06N 3/0442;
G06N 3/045; G06N 3/0464; G10L 25/30**

(86) International application number:
**PCT/US2023/026706**

(87) International publication number:
**WO 2024/006514 (04.01.2024 Gazette 2024/01)**

(54) **DISTANCE BASED SOUND SEPARATION USING MACHINE LEARNING MODELS**

ABSTANDSBASIERTE SCHALLTRENNUNG UNTER VERWENDUNG VON
MASCHINENLERNMODELLEN

SÉPARATION DE SONS BASÉE SUR LA DISTANCE À L'AIDE DE MODÈLES D'APPRENTISSAGE
AUTOMATIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **30.06.2022 US 202263367350 P**

(43) Date of publication of application:
**07.05.2025 Bulletin 2025/19**

(73) Proprietor: **GOOGLE LLC
Mountain View CA 94043 (US)**

(72) Inventors:
• **HERSHEY, John, Randall
Mountain View, CA 94043 (US)**
• **WISDOM, Scott, Thomas
Mountain View, CA 94043 (US)**
• **ERDOGAN, Hakan
Mountain View, CA 94043 (US)**
• **SLANEY, Malcolm, Graham
Mountain View, CA 94043 (US)**
• **LYON, Francis, Richard
Mountain View, CA 94043 (US)**
• **WILSON, Kevin, William
Mountain View, CA 94043 (US)**

• **PATTERSON, Katharine
Mountain View, CA 94043 (US)**

(74) Representative: **Varley, James Richard
Venner Shipley LLP
TIDE Bankside
8 Emerson Street
London SE1 9DU (GB)**

(56) References cited:
**US-A1- 2021 219 048**

• **KATHARINE PATTERSON ET AL: "Distance-Based Sound Separation", ARXIV.ORG, CORNELL UNIVERSITY LIBRARY, 201 OLIN LIBRARY CORNELL UNIVERSITY ITHACA, NY 14853, 1 July 2022 (2022-07-01), XP091261795**
• **NISHIGUCHI SOTA ET AL: "DNN-Based Near- and Far-Field Source Separation Using Spherical-Harmonic-Analysis-Based Acoustic Features", 2018 16TH INTERNATIONAL WORKSHOP ON ACOUSTIC SIGNAL ENHANCEMENT (IWAENC), IEEE, 17 September 2018 (2018-09-17), pages 510 - 514, XP033439069, DOI: 10.1109/ IWAENC.2018.8521401**

**(Cont. next page)**

- **TOBIAS GBURREK ET AL: "Deep Neural Network based Distance Estimation for Geometry Calibration in Acoustic Sensor Networks", ARXIV.ORG, CORNELL UNIVERSITY LIBRARY, 201 OLIN LIBRARY CORNELL UNIVERSITY ITHACA, NY 14853, 24 June 2020 (2020-06-24), XP081709319**

**Description**

**BACKGROUND**

Sound separation refers to the extraction of a subset of sounds from a mixture of sounds. Extracting estimates of clean speech in the presence of interference is a long-standing research problem in signal processing. This task is referred to as speech enhancement when the interference is non-speech, and speech separation when the interference is speech. Assisted listening devices, such as hearing aids, are an important application for these methods, with a typical task being to aid in conversations held in a crowded or noisy space.

KATHARINE PATTERSON ET AL: "Distance-Based Sound Separation", ARXIV.ORG, CORNELL UNIVERSITY LIBRARY, 201 OLIN LIBRARY CORNELL UNIVERSITY ITHACA, NY 14853, 1 July 2022 (2022-07-01), discloses training a neural network to separate near sounds from far sounds in single channel synthetic reverberant mixtures, relative to a threshold distance defining the boundary between near and far.

US 2021/219048 A1 discloses methods/systems wherein an acoustic signal is separated based on a difference in the distance from a sound source to a microphone. By using a filter obtained by associating a value corresponding to an estimated value of a short-distance acoustic signal which is obtained by using "a predetermined function" from a second acoustic signal derived from signals collected by "a plurality of microphones" and emitted from a position close to "the plurality of microphones" with a value corresponding to an estimated value of a long-distance acoustic signal which is emitted from a position far from "the plurality of microphones", a desired acoustic signal representing at least one of a sound emitted from a position close to "a specific microphone" and a sound emitted from a position far from "the specific microphone" is acquired from a first acoustic signal derived from a signal collected by "the specific microphone". The predetermined function is a function which uses an approximation that the sound emitted from a position close to the plurality of microphones is collected as a spherical wave, and a sound emitted from the position far from the plurality of microphones is collected as a plane wave.

NISHIGUCHI SOTA ET AL: "DNN-Based Near- and Far-Field Source Separation Using Spherical-Harmonic-Analysis-Based Acoustic Features" discloses a deep learning-based near and far field source separation method that uses spherical-harmonic-analysis-based acoustic features.

**SUMMARY**

The matter for protection is defined by the claims.

Implementing sound separation for assisted listening is fraught with challenges. The requirement of low algorithmic latency increases the difficulty of the separation problem. Limitations in computational power and memory further strain the ability of source separation neural networks, for which the quality of separation is typically an increasing function of model size. Another challenge in assisted listening is that different users may have different preferences for sounds that are to be enhanced, and/or sounds that are to be suppressed.

The problem of selecting sounds that are to be enhanced has been approached by focusing on speech or otherwise classifying the sounds, as well as using visual input to select the sounds of interest. However, selective listening methods may be cumbersome and may require user effort to control which sounds are enhanced. Such methods may also typically exclude sounds other than speech that the user may want to hear, such as nearby music, the clinking of wine glasses at a dinner table, or the sound of a dropped set of keys. Class-based methods that attempt to include non-speech sounds can fail when there are interfering sounds of the same classes as the desired sounds.

Some techniques such as beamforming use multiple microphones and generally use the direction of arrival (DOA) of sources as a cue to separate them. Near-field beamforming methods can additionally estimate source distance using the spherical nature of acoustic wave fronts. However, such techniques may only distinguish distances of nearby sounds within a range limited by the size of the microphone array, for example, for a line array with halfwavelength, $\lambda/2$, spacing and total length $L$, the maximum range is $L^2/2\lambda$. In some embodiments, DOA and distance estimation may be considered jointly for sound events with two microphones.

Some techniques have demonstrated the feasibility of estimating reverberation parameters such as T60 and direct-to-reverberation ratio (DRR). Neural networks can also be trained to estimate reverberation parameters from a single microphone, as well as room volume. The success of these methods suggests that neural networks are able to perceive cues from raw audio to accurately predict properties of acoustic transfer functions, and that neural networks may be trained to estimate the distance of a source.

Accordingly, there is a need for a sound separation model that can operate on one or more microphones, and that is not subject to physical limitations on a maximum distance that limits near-field beamforming techniques. Also, for example, rather than predict reverb parameters, the model proposed herein can implicitly leverage acoustic cues to identify one or more near sources and one or more far sources in order to separate them.

Although single-channel dereverberation methods attempt to separate a direct path of a reverberant signal (i.e.,

the shortest path of sound propagation) from the reverberant components (i.e. the longest paths of sound propagation), the goal of distance-based sound separation as described herein, is to group sources together based only on whether they are near or far based on a distance threshold, without a need to alter a reverberance associated with the sources. Also, dereverberation methods are generally based on an assumption of a single reverberant source, while the distance-based sound separation as described herein can handle multiple sources.

Also described herein is a system to estimate distances of audio sources. For example, the network may be trained to learn the DRR and estimate distances based on this. Accordingly, the network may not have to estimate room characteristics, and estimate the distance directly instead. In some embodiments, the quality of a voice signal may be evaluated. For example, a system can be configured to evaluate voice quality without access to the original clean audio. In many applications, it may be challenging to access a close-talking microphone signal, or the far end of the communications system. Modern deep neural networks (DNNs) can make such a system viable as humans can judge the quality of a vocal signal, even without knowing the language. Also, for example, such measurement can be performed by predicting physical and/or explainable properties. These features may characterize the noise, distortion, and/or reverberation, and allow users and system engineers to take action on perceived degradations. The quality of the degradation detectors may be analyzed, and these can be configured to estimate mean opinion scores (MOS), and explain how different degradations affect user's perceptions, as indicated by a one-dimensional MOS measure.

Accordingly, distance based sound separation may be performed in several ways. In a first example, a neural network may be trained to separate audio into near and far sounds, and output the predicted near and/or far sounds. In another example, a distance estimation network (e.g., based on DRR), may be trained to estimate respective distances of audio sources, and the sources may be identified as near and far sounds based on a distance threshold. In accordance with the invention, a sound separation network is trained to separate the audio into the component audio tracks, and the distance estimation model is utilized to estimate the respective distances of the separated component audio tracks. Subsequently, the predicted component audio tracks are identified as near and far sounds based on a distance threshold.

In one aspect, a computer-implemented method for distance based sound separation is provided. The method includes receiving, by a computing device, synthetic training data comprising a plurality of audio mixtures, wherein each audio mixture comprises respective one or more first sounds that are proximate to a respective audio input component receiving the audio mixture, and respective one or more second sounds that are not proximate to the respective audio input component, the synthetic training data having been generated by an acoustic simulator to capture acoustic characteristics that vary based on a respective distance from the respective audio input component. The method additionally includes training, based on the training data, a neural network to predict one or more near sounds and one or more far sounds in a particular audio mixture received by a particular audio input component, wherein the one or more near sounds correspond to first sources that are proximate to the particular audio input component, and the one or more far sounds correspond to second sources that are not proximate to the particular audio input component, wherein the predicting is based on particular acoustic characteristics of the particular audio mixture. The method further includes providing, by the computing device, the trained neural network.

In a second aspect, a computing device is provided. The computing device includes one or more processors and data storage. The data storage has stored thereon computer-executable instructions that, when executed by one or more processors, cause the computing device to carry out functions of distance based sound separation. The functions include: receiving, by a computing device, synthetic training data comprising a plurality of audio mixtures, wherein each audio mixture comprises respective one or more first sounds that are proximate to a respective audio input component receiving the audio mixture, and respective one or more second sounds that are not proximate to the respective audio input component, the synthetic training data having been generated by an acoustic simulator to capture acoustic characteristics that vary based on a respective distance from the respective audio input component; training, based on the training data, a neural network to predict one or more near sounds and one or more far sounds in a particular audio mixture received by a particular audio input component, wherein the one or more near sounds correspond to first sources that are proximate to the particular audio input component, and the one or more far sounds correspond to second sources that are not proximate to the particular audio input component, wherein the predicting is based on particular acoustic characteristics of the particular audio mixture; and providing, by the computing device, the trained neural network.

In a third aspect, a computer program is provided. The computer program includes instructions that, when executed by a computer, cause the computer to carry out functions of distance based sound separation. The functions include: receiving, by a computing device, synthetic training data comprising a plurality of audio mixtures, wherein each audio mixture comprises respective one or more first sounds that are proximate to a respective audio input component receiving the audio mixture, and respective one or more second sounds that are not proximate to the respective audio input component, the synthetic training data having been generated by an acoustic simulator to capture acoustic characteristics that vary based on a respective distance from the respective audio input component; training, based on the training data, a neural network to predict one or more near sounds and one or more far sounds in a particular audio mixture received by a particular audio input component, wherein the one or more near sounds correspond to first sources that are proximate to the particular audio input component, and the one or more far sounds correspond to second sources that are not proximate to the particular audio input component, wherein the predicting is based on particular acoustic characteristics of the particular audio mixture; and providing, by the computing device, the trained neural network.

In a fourth aspect, an article of manufacture is provided. The article of manufacture includes one or more computer readable media having computer-readable instructions stored thereon that, when executed by one or more processors of a computing device, cause the computing device to carry out functions of distance based sound separation. The functions include: receiving, by a computing device, synthetic training data comprising a plurality of audio mixtures, wherein each audio mixture comprises respective one or more first sounds that are proximate to a respective audio input component receiving the audio mixture, and respective one or more second sounds that are not proximate to the respective audio input component, the synthetic training data having been generated by an acoustic simulator to capture acoustic characteristics that vary based on a respective distance from the respective audio input component; training, based on the training data, a neural network to predict one or more near sounds and one or more far sounds in a particular audio mixture received by a particular audio input component, wherein the one or more near sounds correspond to first sources that are proximate to the particular audio input component, and the one or more far sounds correspond to second sources that are not proximate to the particular audio input component, wherein the predicting is based on particular acoustic characteristics of the particular audio mixture; and providing, by the computing device, the trained neural network.

In a fifth aspect, a system to carry out functions of distance based sound separation. The system includes: means for receiving, by a computing device, synthetic training data comprising a plurality of audio mixtures, wherein each audio mixture comprises respective one or more first sounds that are proximate to a respective audio input component receiving the audio mixture, and respective one or more second sounds that are not proximate to the respective audio input component, the synthetic training data having been generated by an acoustic simulator to capture acoustic characteristics that vary based on a respective distance from the respective audio input component; means for training, based on the training data, a neural network to predict one or more near sounds and one or more far sounds in a particular audio mixture received by a particular audio input component, wherein the one or more near sounds correspond to first sources that are proximate to the particular audio input component, and the one or more far sounds correspond to second sources that are not proximate to the particular audio input component, wherein the predicting is based on particular acoustic characteristics of the particular audio mixture; and means for providing, by the computing device, the trained neural network.

In a sixth aspect, a computer-implemented method of applying a trained neural network for distance based sound separation is provided. The method includes receiving, by an audio input component of a computing device, an audio mixture from one or more sources. The method also includes predicting, by the trained neural network, one or more near sounds and one or more far sounds from the audio mixture, wherein the one or more near sounds correspond to first sources that are proximate to the audio input component, and the one or more far sounds correspond to second sources that are not proximate to the audio input component, wherein the predicting is based on acoustic characteristics of the received audio mixture, the neural network having been trained on training data comprising a plurality of audio mixtures, wherein a given audio mixture of the plurality of audio mixtures comprises respective one or more first sounds that are proximate to a respective audio input component receiving the given audio mixture, and respective one or more second sounds that are not proximate to the respective audio input component, the synthetic training data having been generated by an acoustic simulator to capture acoustic characteristics that vary based on a respective distance from the respective audio input component. The method additionally includes providing, by the computing device, the predicted one or more near sounds.

In a seventh aspect, a computing device for applying a trained neural network for distance based sound separation is provided. The computing device includes one or more processors and data storage. The data storage has stored thereon computer-executable instructions that, when executed by one or more processors, cause the computing device to carry out functions. The functions include: receiving, by an audio input component of a computing device, an audio mixture from one or more sources; predicting, by the trained neural network, one or more near sounds and one or more far sounds from the audio mixture, wherein the one or more near sounds correspond to first sources that are proximate to the audio input component, and the one or more far sounds correspond to second sources that are not proximate to the audio input component, wherein the predicting is based on acoustic characteristics of the received audio mixture, the neural network having been trained on training data comprising a plurality of audio mixtures, wherein a given audio mixture of the plurality of audio mixtures comprises respective one or more first sounds that are proximate to a respective audio input component receiving the given audio mixture, and respective one or more second sounds that are not proximate to the respective audio input component, the synthetic training data having been generated by an acoustic simulator to capture acoustic characteristics that vary based on a respective distance from the respective audio input component; and providing, by the computing device, the predicted one or more near sounds.

In an eighth aspect, a computer program for applying a trained neural network for distance based sound separation is provided. The computer program includes instructions that, when executed by a computer, cause the computer to carry out functions. The functions include: receiving, by an audio input component of a computing device, an audio mixture from one or more sources; predicting, by the trained neural network, one or more near sounds and one or more far sounds from the audio mixture, wherein the one or more near sounds correspond to first sources that are proximate to the audio input component, and the one or more far sounds correspond to second sources that are not proximate to the audio input component, wherein the predicting is based on acoustic characteristics of the received audio mixture, the neural network having been trained on training data comprising a plurality of audio mixtures, wherein a given audio mixture of the plurality of audio mixtures comprises respective one or more first sounds that are proximate to a respective audio input component receiving the given audio mixture, and respective one or more second sounds that are not proximate to the respective audio input component, the synthetic training data having been generated by an acoustic simulator to capture acoustic characteristics that vary based on a respective distance from the respective audio input component; and providing, by the computing device, the predicted one or more near sounds.

In a ninth aspect, an article of manufacture for applying a trained neural network for distance based sound separation is provided. The article of manufacture includes one or more computer readable media having computer-readable instructions stored thereon that, when executed by one or more processors of a computing device, cause the computing device to carry out functions. The functions include: receiving, by an audio input component of a computing device, an audio mixture from one or more sources; predicting, by the trained neural network, one or more near sounds and one or more far sounds from the audio mixture, wherein the one or more near sounds correspond to first sources that are proximate to the audio input component, and the one or more far sounds correspond to second sources that are not proximate to the audio input component, wherein the predicting is based on acoustic characteristics of the received audio mixture, the neural network having been trained on training data comprising a plurality of audio mixtures, wherein a given audio mixture of the plurality of audio mixtures comprises respective one or more first sounds that are proximate to a respective audio input component receiving the given audio mixture, and respective one or more second sounds that are not proximate to the respective audio input component, the synthetic training data having been generated by an acoustic simulator to capture acoustic characteristics that vary based on a respective distance from the respective audio input component; and providing, by the computing device, the predicted one or more near sounds.

In a tenth aspect, a system for applying a trained neural network for distance based sound separation is provided. The system includes means for receiving, by an audio input component of a computing device, an audio mixture from one or more sources; means for predicting, by the trained neural network, one or more near sounds and one or more far sounds from the audio mixture, wherein the one or more near sounds correspond to first sources that are proximate to the audio input component, and the one or more far sounds correspond to second sources that are not proximate to the audio input component, wherein the predicting is based on acoustic characteristics of the received audio mixture, the neural network having been trained on training data comprising a plurality of audio mixtures, wherein a given audio mixture of the plurality of audio mixtures comprises respective one or more first sounds that are proximate to a respective audio input component receiving the given audio mixture, and respective one or more second sounds that are not proximate to the respective audio input component, the synthetic training data having been generated by an acoustic simulator to capture acoustic characteristics that vary based on a respective distance from the respective audio input component; and means for providing, by the computing device, the predicted one or more near sounds.

The foregoing summary is illustrative only and is not intended to be in any way limiting. In addition to the illustrative aspects, embodiments, and features described above, further aspects, embodiments, and features will become apparent by reference to the figures and the following detailed description and the accompanying drawings.

## BRIEF DESCRIPTION OF THE FIGURES

FIG. 1A is a diagram illustrating an example distance based sound separation model, in accordance with example embodiments.

FIG. 1B is a diagram illustrating another example distance based sound separation model, in accordance with example embodiments.

FIG. 1C is a diagram illustrating another example distance based sound separation model, in accordance with the invention.

FIG. 2A illustrates an example source distribution by distance from a microphone, in accordance with example embodiments.

FIG. 2B illustrates an example two dimensional (2D) spatial distribution, in accordance with example embodiments.

FIG. 3 is a table illustrating mean SI-SDRi for distance threshold, in accordance with example embodiments.

FIG. 4 is a table illustrating performance as a function of distance threshold, in accordance with example embodiments.

FIG. 5 is an image illustrating a near target with one near source and a far target with one near source, in accordance with example embodiments.

FIG. 6 is an image illustrating a near target with two near sources and a far target with two near sources, in accordance with example embodiments.

FIG. 7 is an image illustrating a near target with three near sources and a far target with three near sources, in accordance with example embodiments.

FIG. 8 is an image illustrating a near target with four near sources and a far target with four near sources, in accordance with example embodiments.

FIG. 9A is a table illustrating performance as a function of SPP, in accordance with example embodiments.

FIG. 9B is a table illustrating performance as a function of percentage silent training targets, in accordance with example embodiments.

FIG. 10 is a diagram illustrating an example explainable voice-quality detector model, in accordance with example embodiments.

FIG. 11A is an example scatter plot illustrating a prediction performance for SNR, in accordance with example embodiments.

FIG. 11B is an example scatter plot illustrating a prediction performance for T60, in accordance with example embodiments.

FIG. 11C is an example scatter plot illustrating a prediction performance for direct-to-reverberation (DRR), in accordance with example embodiments.

FIG. 11D is an example scatter plot illustrating a prediction performance based on distance using RoomSim data, in accordance with example embodiments.

FIG. 12 is a diagram illustrating training and inference phases of a machine learning model, in accordance with example embodiments

FIG. 13 depicts a distributed computing architecture, in accordance with example embodiments.

FIG. 14 is a block diagram of a computing device, in accordance with example embodiments.

FIG. 15 depicts a network of computing clusters arranged as a cloud-based server system, in accordance with example embodiments.

FIG. 16 is a flowchart of a method, in accordance with example embodiments.

FIG. 17 is a flowchart of another method, in accordance with example embodiments.

## DETAILED DESCRIPTION

This application relates, in one aspect, to distance-based sound separation. For example, a user may desire to hear any sounds that occur within a local region around them, and block sounds coming from farther away. A system that accomplishes this would allow the user to engage in normal conversations without the interference of a crowded environment, and without becoming deaf to ordinary non-speech events in their immediate area. Generally, there may be cues for distance that are related to superficial characteristics of the sound, rather than to a fine spectro-temporal structure of the sound. Accordingly, a system that relies on such cues may have a computational advantage, and an advantage in terms of generalization, compared to a system that has to perform deep pattern recognition in order to separate sounds. Humans have a perceptual ability to estimate the relative distances of various sources of sounds. Accordingly, in applications such as assisted listening, there is a need for a machine learning model to perform such distance-based separation akin to human hearing abilities.

Extracting estimates of clean speech in the presence of interference is a challenging problem in signal processing. This task is generally referred to as *speech enhancement* when the interference is non-speech, and *speech separation* when the interference is speech. More generally, *sound separation* refers to the extraction of a subset of sounds from a mixture of sounds.

Hearing aids and other assisted listening devices are useful applications for these methods, with a typical task being to aid in conversations held in a noisy space. But implementing sound separation for assisted listening is challenging, requiring low algorithmic latency and limited computation and memory. Further, it may be challenging to distill sounds that a user may wish to hear.

Generally speaking, the problem of selecting sounds that are to be enhanced and sounds that are to be suppressed is generally approached by focusing only on speech, or otherwise classifying the sounds, as well as by using visual inputs to select the sounds of interest. However, these methods may not be appropriate in many situations. For example, selective listening methods may be cumbersome and may require user effort to control which sounds are enhanced. Also, for example, such selective listening methods typically exclude sounds other than speech that the user may want to hear, such as nearby music, the clinking of wine glasses at dinner, and/or the tell-tale sound of a dropped set of keys. Class-based methods that attempt to include non-speech sounds can fail when there are interfering sounds of the same classes as the desired sounds.

As described herein, a neural network may be trained to separate signals into two component signals, such as a first set of signals corresponding to nearby sources, and a second set of signals corresponding to sources that are further away, wherein a distance of the sources is measured relative to a distance threshold.

*Overview of distance based sound separation of near and far sources*

The techniques described herein eliminate deficiencies in class-based methods that attempt to include non-speech sounds, as such methods may fail when there are interfering sounds of the same classes as the desired sounds. The techniques described herein eliminate deficiencies in methods that are based on beamforming, that have physical limitations associated with a maximum distance associated with near-field beamforming. As described herein, acoustic cues can be implicitly leveraged to identify one or more near sources and one or more far sources in order to separate them. This is in contrast to relying on a prediction of reverb parameters. The techniques described herein group sources together based only on whether they are near or far based on a distance threshold, without necessarily altering a reverberance of the sources. Multiple audio sources can be analyzed. The proposed neural networks are computationally efficient, and use fewer resources. Such networks may also be configured to reside on a mobile computing device.

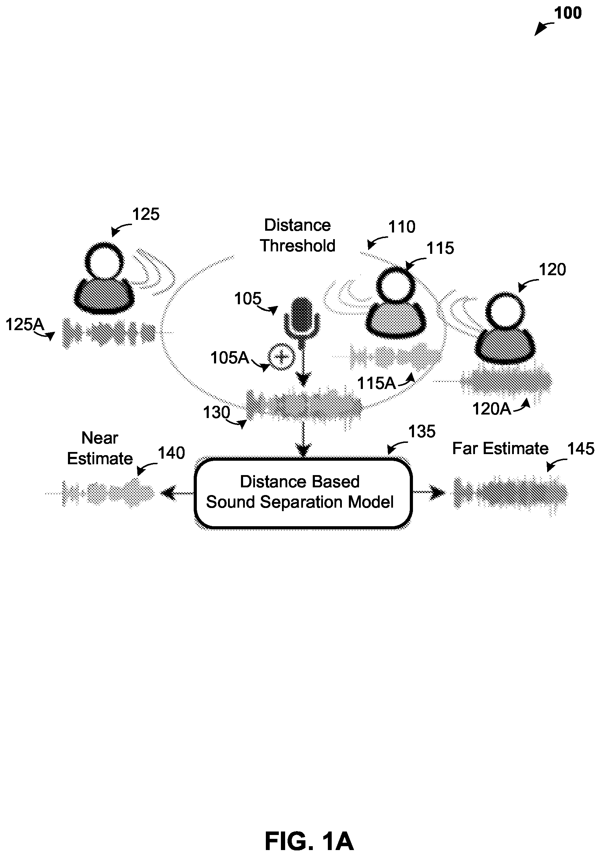

FIG. 1A is a diagram illustrating an example distance based sound separation model 100, in accordance with example embodiments. As illustrated, microphone 105 may receive audio from various sources. Although microphone 105 is illustrated as a standalone device, it can be integrated within a computing device, a speaker, a headset, a mobile computing device, a camera, etc. An example threshold distance 110 is indicated as a distance measured from microphone 105. The audio sources may include one or more users, such as first user 115, second user 120, and third user 125. As illustrated, first user 115 may be within threshold distance 110, whereas second user 120 and third user 125 may be outside threshold distance 110. Microphone 105 may receive audio signals from human and non-human sources. For example, microphone 105 may receive first audio signal 115A from first user 115, second audio signal 120A from second user 120, and third audio signal 125A from third user 125. These audio signals may be mixed by an audio mixer 105A to generate audio mixture 130. Subsequently, audio mixture 130 may be input into distance based sound separation model 135, which may separate audio mixture 130 into near estimate 140 (e.g., to include audio from first user 115), and far estimate 145 (e.g., to include audio from second user 120 and third user 125). Although far estimate 145 is illustrated as a mixture of second audio signal 120A and third audio signal 125A, in some embodiments, these signals may be separated as well.

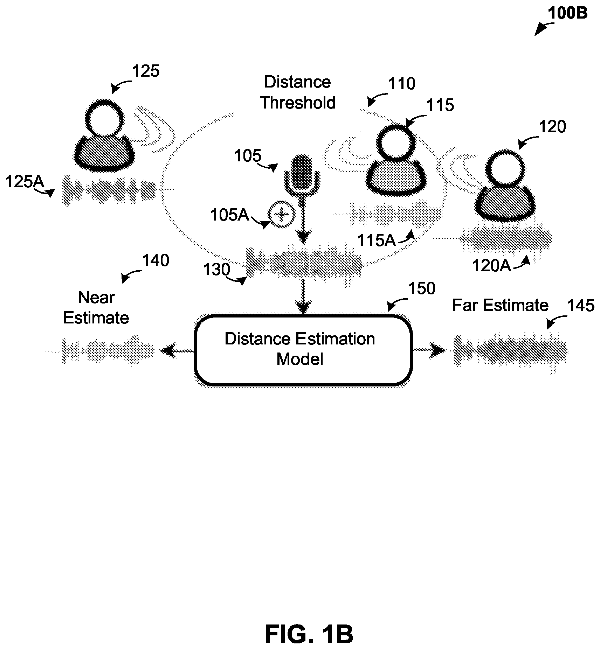

FIG. 1B is a diagram illustrating another example distance based sound separation model, in accordance with example embodiments. FIG. 1B shares one or more components with FIG. 1A. As illustrated, the distance based sound separation model 135 of FIG. 1A (e.g., trained to separate near and far sounds) can be a distance estimation model 150. For example, distance estimation model 150 (e.g., based on DRR), may be trained to estimate respective distances of audio sources from audio mixture 130, and the sources may be identified as near estimate 140 and far estimate 145 based on distance threshold 110.

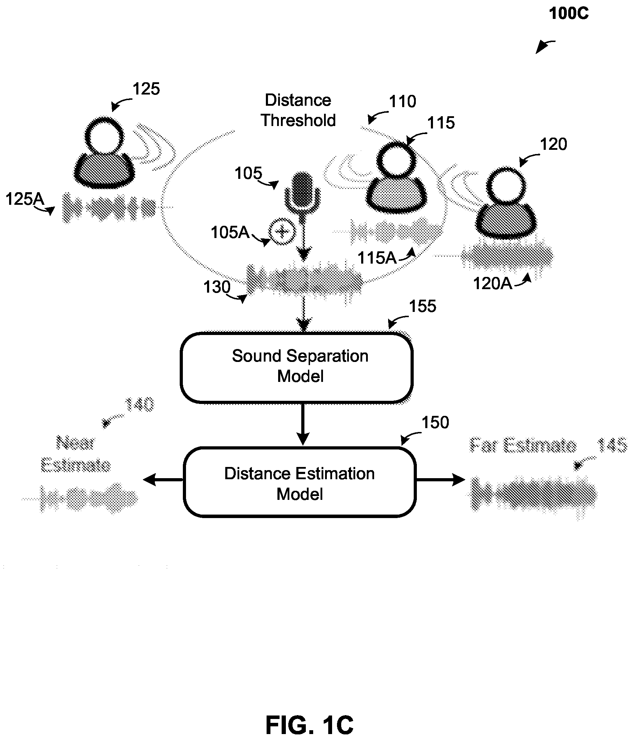

FIG. 1C is a diagram illustrating another example distance based sound separation model, in accordance with the invention. FIG. 1C shares one or more components with FIG. 1A and FIG. 1B. As illustrated, the distance based sound separation model 135 of FIG. 1A (e.g., trained to separate near and far sounds) can be a combination of a sound separation model 155 and a distance estimation model 150. Sound separation model 155 is trained to separate audio mixture 130 into component audio tracks, and the distance estimation model 150 is utilized to estimate the respective distances of the separated component audio tracks. Subsequently, the predicted component audio tracks are identified as near estimate 140 and far estimate 145 based on distance threshold 110. Details of sound separation model 155 are not provided herein, as known sound separation networks may be utilized.

Possible cues for distance perception may be traced to physical effects. The intensity *I* of a *direct path* component of sound varies with distance *d* according to inverse-square law $I \propto 1/d^2$. However, in an enclosed area, the intensity of a reverberation for the sound, is generally independent of its distance to the source of the sound, such as a microphone. Therefore, the DRR ratio decreases with distance, and may be leveraged as a cue for human distance perception. In some examples, there may be a *proximity effect* with directional microphones in which low-frequencies are more accentuated for closer sources, and this applies well for sources less than a certain distance threshold, for example, less than one meter away. Absorption by the air is generally a frequency-dependent effect of distance, and may play a role over distances beyond a certain distance threshold, for example, beyond tens of meters. Other effects of distance on sound can originate from spatial effects that could be detected using an array of microphones.

In some embodiments, a neural network for distance-based sound separation may be trained using mixtures of near and far sounds, the acoustic properties of the sounds having been emulated using an acoustic room simulator. For example, ground-truth targets for the near and far signals relative to a distance threshold may be used. For illustrative purposes, in the examples herein, the sounds, both near and far, are speech. As described herein, the neural network can be trained to perform sound separation based on distance. In particular, in some examples, such as with a distance threshold of 1.5 meters (m), a single nearby speaker, and as many as four distant speakers, distance-based sound separation can achieve improvements of up to 4.4 dB in scale-invariant signal to noise ratio (SI-SNR).

*Example Models to identify near and far sounds*

To separate sound based on distance, an example architecture for a neural network may be based on a short-time Fourier transform (STFT) masking. In some embodiments, for the STFT, a 32 millisecond (ms) square-root Hann window with a 16 ms hop may be used. The 0.3-power-compressed magnitude of the STFT, Y, of the time-domain mixture, y, may be fed as input to *L* layers of a unidirectional long short-term memory model (LSTM) with *N* units each. Then, a fully-connected layer with a sigmoid activation may be applied to create two masks for the input STFT *Y*, where the two masks may be denoted as $M_{near}$ and $M_{far}$. To ensure consistency of the STFT, each of the masked STFTs for near and far may be passed through inverse and forward STFT operations: $\hat{X}_{near|far} = STFT\{iSTFT(M_{near|far} \odot Y)\}$.

In some embodiments, a training loss may be based on a mean-squared error between 0.3-power-compressed magnitude of target *X* and estimate $\hat{X}$, based on the relationship below:

$$\mathcal{L}(X, \hat{X}) = \sum_{f,t} (|X_{f,t}|^{0.3} - |\hat{X}_{f,t}|^{0.3})^2$$

(Eqn. 1)

In some embodiments, a first weight (e.g., 0.8) on the near loss, and a second weight (e.g., 0.2) on the far loss may be used. For example, the weighted composition may be denoted as $0.8 \mathcal{L}(X_{nears}, \hat{X}_{near}) + 0.2 \mathcal{L}(X_{far}, \hat{X}_{fay})$. Generally, such a weighted loss may enable the model to focus on a performance of near targets, which is more likely to be desired as an output in a practical application. Also, for example, an Adam optimizer with a learning rate of $3 \times 10^{-5}$, a batch size of 128, may be used, and training can be performed, for example, on one million steps on 16 Google Cloud TPU v3 cores.

*Acoustic Simulation*

To generate a large amount of training data, an image-based acoustic room simulator with frequency-dependent wall filters may be used to generate reverb impulse responses (RIRs) for rooms with varied acoustic properties, and with randomized microphone and source locations. Basic distance-related phenomena such as an amplitude and DRR effects can be well simulated. Also, for example, clean speech recordings may be randomly assigned to the source locations within each room and convolved with the corresponding RIRs. Training examples for each room may be generated by combining sources within a threshold distance into a near target $x_{near}$, and sources beyond a threshold distance into a far target $x_{far}$. Generally, the near and far targets may be added to create mixture, $x_{near} + x_{far}$. This mixture may be input to train the model for sound separation.

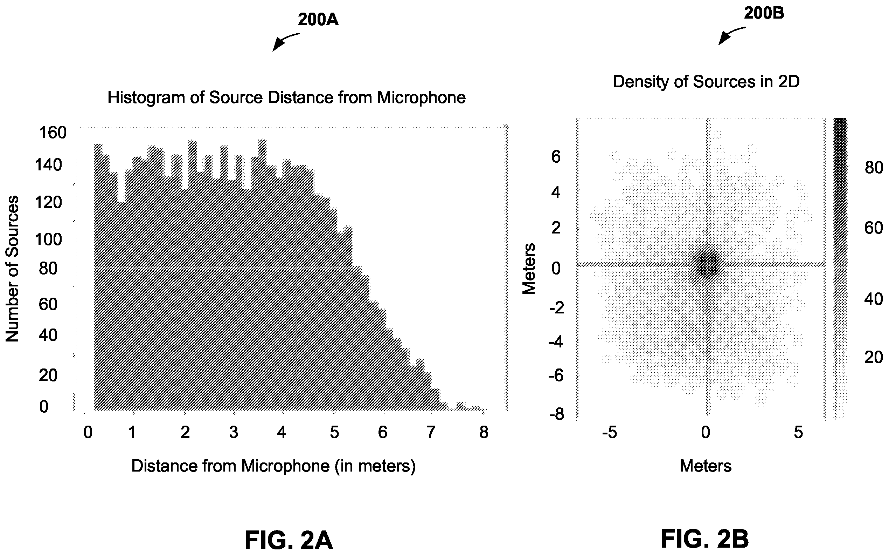

In some embodiments, within each of the randomly generated rooms, 5 speaker locations and 1 microphone location may be randomly generated, such that the distance between the microphone and each source is maintained to be uniformly distributed, subject to a rejection of samples falling outside each room. The resulting distribution of distances from the microphones is illustrated in Figure 2.

FIG. 2A illustrates an example source distribution 200A by distance from a microphone, in accordance with example embodiments. Source distribution 200A is a histogram that indicates a distance from a microphone in meters along the horizontal axis, and a number of sources along the vertical axis. For example, within each generated room, 5 speaker locations and 1 microphone location may be randomly generated, such that the distance between the microphone and each source is uniformly distributed subject to staying inside the walls of each randomly generated room. This distribution of distances from the microphones is illustrated in FIG. 2A.

FIG. 2B illustrates an example two dimensional (2D) spatial distribution 200B, in accordance with example embodiments. As illustrated, a distance from a microphone is indicated in meters along the horizontal axis. Spatial distribution 200B differs from what might be expected in, for example, a restaurant setting, where an average number of sources at a given distance radius is likely to increase as the distance increases.

*Data Preparation*

In some embodiments, speech recordings from the Libri-Light dataset may be used for training, with validation, and test partitions from the Libri-Speech dataset may be used. The speaker IDs in the Libri-Speech dataset are unique for each partition. For the synthetic room data, rooms may be generated with dimensions varying from $3.0 \times 4.0 \times 2.13$ meters to $7.0 \times 8.0 \times 3.05$ meters.

For example, during training, randomly chosen Libri-Light clips may be reverberated and mixed according to a randomly chosen RIR to create clips that are 10 seconds in duration. Source utterances shorter than 10 seconds are offset at random intervals within the 10 second clip, and source utterances longer than 10 seconds may be clipped to a random 10 second interior segment.

Also, for example, source and microphone locations may be used to determine which sources are near or far in relation to the microphone in the given room, and for a given threshold distance. To vary the number of sources, a *source presence probability* (SPP) may be applied to each source, so that the total number of sources in a room can vary from 0 to 5, with a distribution dependent on the chosen SPP.

Because the rooms are generated independently of a specific distance threshold, the choice of distance threshold may affect the number of sources considered near versus far for a given room. In particular, the choice of distance threshold may affect the fraction of examples where the sources are considered near or where the sources are considered far, resulting in silent far targets or silent near targets. Distances thresholds of 0.8/1.5/3.0 meters can result in training data with silent far target fractions of 0.0/0.001/0.04, respectively. It is notable that some thresholds result in a majority of training examples containing a silent target, even for an SPP of 1.0.

*Metrics*

For training examples where both near and far targets have sources present (i.e. neither target is silent), a scale invariant SDR improvement ($SI\_SDR_i$) can be used, as provided below:

$$SI\_SDR_i(x, \hat{x}) = SI\_SDR(x, \hat{x}) - SI\_SDR(x; y)$$

(Eqn. 2)

SI_SDR measures signal fidelity with respect to a reference signal while allowing for a gain mismatch, as provided below:

$$SI\_SDR_i(x, \hat{x}) = 10 \log_{10}(||\alpha x||^2/||\alpha x - \hat{x}^s||^2)$$

(Eqn. 3)

where $\alpha = \underset{a}{\mathrm{argmin}} ||ax - \hat{x}||^2 = x^T \hat{x}/||x||^2$. $SI\_SDR_i$ diverges when one of the targets is silent, because the input mixture will comprise the non-silent target and achieves $\infty$ dB SI_SDR, and the silent target achieves $-\infty$ dB SI_SDR. In some embodiments, a noise reduction metric may be used for a silent near target to measure how much of the far sound leaks into the silent near output. The following expression may be used:

$$NoiseReduction(y, \hat{x}_{near}) = 10 \log_{10}(||y||^2/||\hat{x}_{near}||^2)$$

(Eqn. 4)

which measures a power reduction of the separated output $\hat{x}_{near}$ relative to the input audio mixture power y.

*Results: Effect of distance threshold*

The distance-based separation network described herein may be compared to a conventional speech separation baseline where the same network architecture is trained (but with more masking outputs and a permutation-invariant loss) to output 5 separate source estimates, one for each possible speaker. To upper-bound the performance of this baseline, oracle knowledge of the true near and far targets may be used to find an optimal grouping of the 5 separate source estimates into near and far estimates. In all but one condition, direct distance-based separation outperforms this upper bound on the "separate-all" baseline.

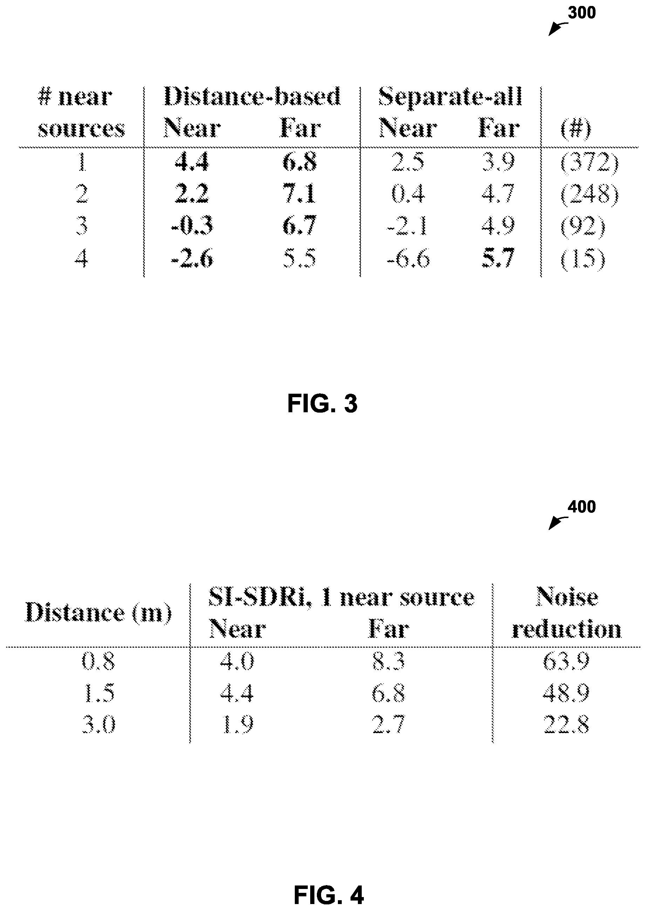

FIG. 3 is a table 300 illustrating mean scale-invariant signal to distortion ratio improvement ($SI\_SDR_i$) for distance threshold, in accordance with example embodiments. The values illustrated are based on a threshold of 1.5 m, Long Short Term Memory (LSTM) depth $L = 4$, width $N = 400$, and training source presence probability (SPP) of 0.5, on an evaluation set of 1200 5-speaker examples with SPP of 1.0. "Distance-based" refers to the method of directly training a model to separate near sounds from far sounds as described herein. "Separate-all" is a baseline in which the same network architecture is trained to output 5 individual sources, which may then be grouped into one or more near estimates and one or more far estimates. They may be bucketed according to a number of near speakers (1 near speaker implies 4 far speakers, etc.).

FIG. 4 is a table 400 illustrating performance as a function of distance threshold, in accordance with example embodiments. For example, performance may be evaluated for a model (e.g., the model evaluated in table 300 of FIG. 3), trained with varied distance thresholds. $SI\_SDR_i$ is given for all examples with 1 non-silent near source. Noise reduction may be determined for the 271 examples with silent near targets. As indicated, performance may generally degrade with increased distance threshold values, despite the fact that higher thresholds can result in more non-silent training targets. This is illustrated in Figures 2A-B, and described under "Data Preparation," where a threshold at 3 meters is closer to the center of the distribution than a threshold of 0.8 or 1.0, and thus may change the training examples to have fewer silent targets.

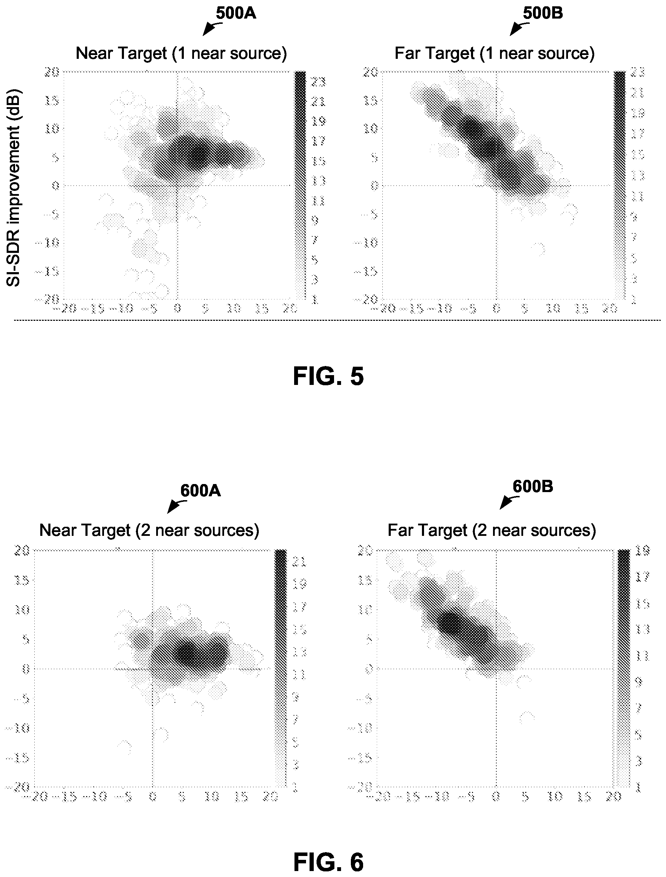

FIGS. 5-8 illustrate example plots for $SI\_SDR_i$ in decibels (dB) as a function of input SI-SDR for one or more near targets and one or more far targets, in accordance with example embodiments. For example, $SI\_SDR_i$ may be determined for a model (e.g., the model evaluated in table 300 of FIG. 3) on test examples with a distance threshold of 1.5 m. The results may be divided by the number of sources in the near target.

FIG. 5 comprises a first distribution 500A illustrating a near target with one near source and a second distribution 500B illustrating a far target with one near source, in accordance with example embodiments.

FIG. 6 comprises a first distribution 600A illustrating a near target with two near sources and a second distribution 600B illustrating a far target with two near sources, in accordance with example embodiments.

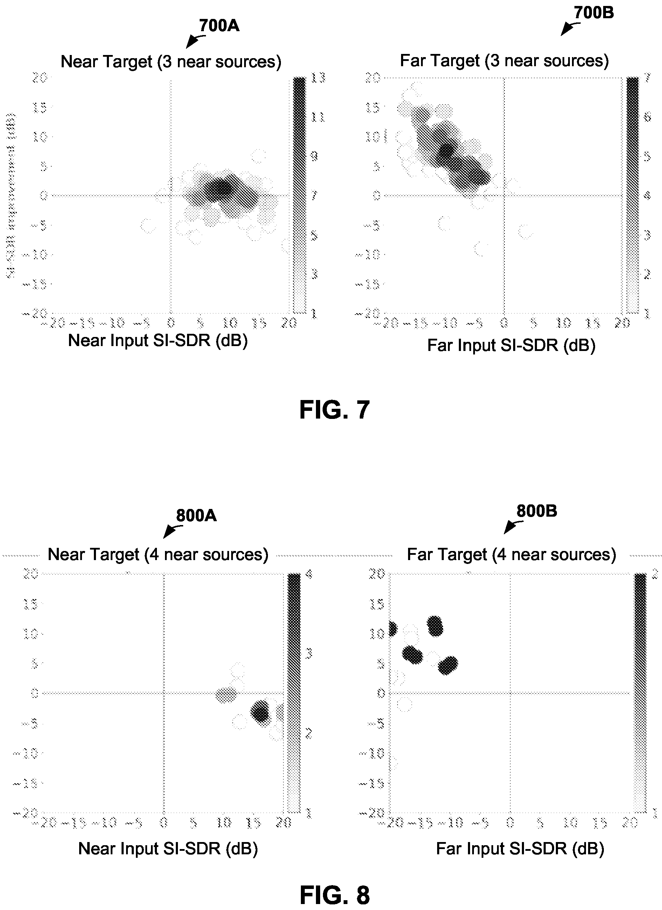

FIG. 7 comprises a first distribution 700A illustrating a near target with three near sources and a second distribution 700B illustrating a far target with three near sources, in accordance with example embodiments.

FIG. 8 comprises a first distribution 800A illustrating a near target with four near sources and a second distribution 800B illustrating a far target with four near sources, in accordance with example embodiments.

*Results: Effect of distance threshold*

Combinations of LSTM with depth $L \in \{2, 4, 6\}$ and width $N \in \{200, 400, 600\}$ are evaluated, except $L = 6$ and $N = 600$, which can exceed resource constraints. Overall, larger models appear to perform better, with LSTM width $N$ contributing more to performance increases. The SI-SDR difference between the smallest model and the largest model for distance thresholds of 0.8 m, 1.5 m, and 3.0 m appears to be 0.9 dB near / 1.2 dB far, 1.5 dB near / 1.6 dB far, and 1.8 dB near / 1.4 dB far, respectively. As illustrated, with an increasing model size, $SI\_SDR_i$ appears to improve more for higher distance thresholds.

*Results: Effect of varied speaker count in evaluation set*

To explore whether the model uses the relationship between the number of near sources and the number of far sources, the SPP may be varied. For example, an SPP of 1.0 may indicate that the 5 sources are present in the mixture, and in general, a SPP of p induces a binomial distribution B(5, p) over a number of sources. This generally results in a modification of the distribution of near and far speaker counts. For example, the baseline model described with reference to FIG. 3 was trained with a SPP of 0.5; however, the evaluation set used in other sections may use a SPP of 1.0 for ease of slicing data by the number of near speakers. This indicates that training data and the evaluation data differ in terms of near and far speaker counts.

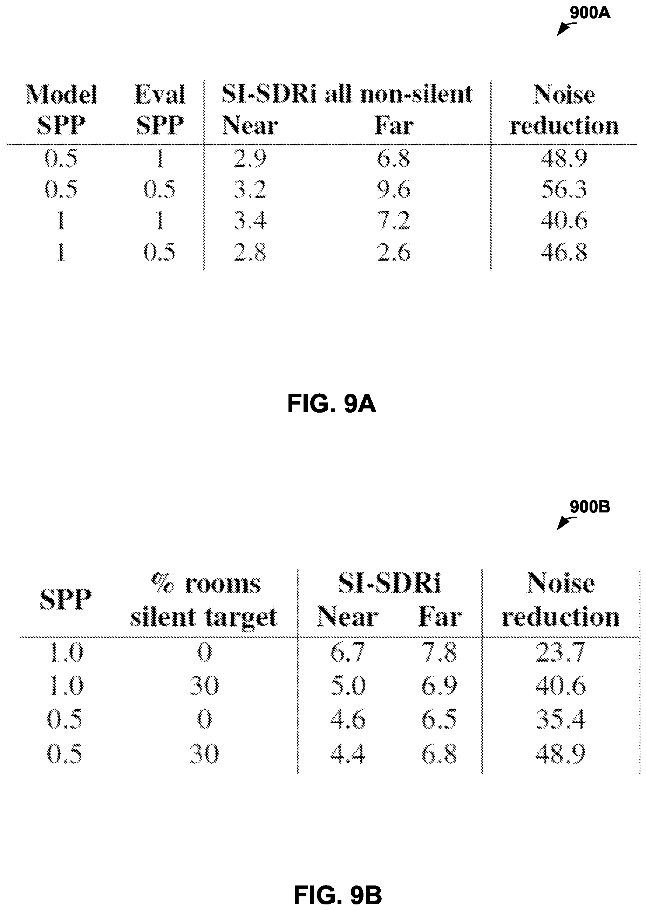

In order to study this mismatch, a version of the evaluation set may be generated with a SPP of 0.5. This can provide a set with 527 silent near target examples, 411 examples with sound in near and far (i.e. 1 to 4 speakers in each target, $sum \leq 5$), and 62 examples with silent far targets. The baseline model may be trained with a SPP of 1.0 instead of 0.5. Results for the baseline model and evaluation data at SPPs of 0.5 and 1.0 are illustrated in FIG. 9A.

FIG. 9A is a table 900A illustrating performance as a function of SPP, in accordance with example embodiments. For example, performance may be evaluated for a model (e.g., the model evaluated in table 300 of FIG. 3, except for SPP). For Eval SPP = 1, $SI\_SDR_i$ may be provided for 727 examples with one or more non-silent near targets and one or more far targets. Noise reduction may be calculated for the 271 examples with silent near targets. For Eval SPP = 0.5, $SI\_SDR_i$ may be for 394 non-silent near and far target examples, noise reduction for 538 silent near targets examples.

Generally, the performance of the models appears to be optimal when the training SPP matches the SPP associated with the evaluation data, as may be expected. However, the effect of mismatch for near $SI\_SDR_i$ appears to be relatively minor. For far $SI\_SDR_i$, more degradation with mismatched SPPs may be observed, indicating that source count may be a significant cue for far source estimation.

*Results: Effect of silent targets*

In some embodiments, to study the effect of silent targets, the RIRs may be pre-filtered to achieve certain percentages of silent targets (e.g., prior to applying SPP). The results are illustrated in table 900B in FIG. 9B for SPPs of 1.0 and 0.5.

FIG. 9B is a table 900B illustrating performance as a function of percentage silent training targets, in accordance with example embodiments. "% rooms silent target" may refer to a number of rooms in the training set with silent near or far targets, before the SPP was applied. The noise reduction may be calculated only for the 271 evaluation examples with silent near targets. The correlation between increased performance and decreased silent targets seen in table 900B suggests that the degradation illustrated in FIG. 4 with increased distance threshold is a true artifact of the distance, as opposed to an effect of the change in training data between models. Note that SPP and percentage of rooms with silent targets are compounding effects. As expected, providing the model with more examples with non-silent targets increases $SI\_SDR_i$ on non-silent examples, but can degrade noise reduction on silent near examples.

*Overview of Distance Estimation Models*

A system for estimating a distance of a sound source based on DRR is described. For example, the quality of a voice signal after it is recorded and/or transmitted may be measured. This may be performed without the use of the original or reference signal, as human listeners are able to judge the quality of a vocal signal, even without knowing the spoken language. The vocal quality may be described by characterizing several degradations of the signal that can be interpreted and acted upon by the system engineers and/or the user. As described herein, the amount of non-speech noise, degradations due to reverberation and the distance to the speaker, may be estimated.

Dereverberation is a technique to remove effects of reverberation from sound, after reverberant sound has been captured by microphones. Reverberation is generally caused by sound reflections in an enclosed space (e.g., a room) and can be quantified by a room reverberation time and a direct-to-reverberant ratio (DRR). Dereverberation increases the direct-to-reverberant ratio resulting in sound that is perceived as closer and clearer.

When a discrete time room impulse response (RIR), *h(n),* is known, the DRR at a given location may be determined as a ratio of the sound pressure level of a direct sound from a directional source to the reverberant sound pressure level incident at the given location. The relationship is provide as follows:

$$DRR = 10 * \log_{10}\left(\frac{\sum_{n=n_d-n_0}^{n=n_d+n_0} h^2(n)}{\sum_{n=n_d+n_0}^{\infty} h^2(n)}\right)$$

$$(Eqn.\ 5)$$

Where $n_d$ is a sample index of a peak of the direct sound arrival and $n_0$ is a number of samples corresponding to a selected temporal window (e.g., ranging from 1.0 to 2.5 ms). When the RIR, *h(n),* is known, DRR can be computed from Eqn. 5. However, in an absence of RIR, the DRR may be computed independently, using an estimation of the sound sources.

A mean opinion score (MOS) is one way to measure voice quality. To determine the MOS, listeners may be asked to rate the quality of a voice signal on a five point scale. Listeners may generally judge which signal is cleaner when the degradation varies along any one axis (e.g., noise, reverb, compression artifacts). However, listeners may find it more challenging to put them on a metric scale. Also, for example, given a MOS rating, it can be challenging to infer what aspect of the recording or communication setup may need to be adjusted.

Modern DNN speech-enhancement systems may be trained to learn which portions of a speech spectrogram are part of the voice and which are noise. Such models may be used to predict various degradations of the signal. For illustrative purposes, the various degradation estimates may be combined to determine a MOS, and a contribution of each degradation to the overall MOS may be determined.

*Example Training Datasets*

In some embodiments, the models may be trained with two types of data: RoomSim and MOS. The individual feature models may be trained with real speech and noise in a simulated room environment. The MOS features may be trained with datasets from the *Conferencing Speech 2022 challenge* with human judgements.

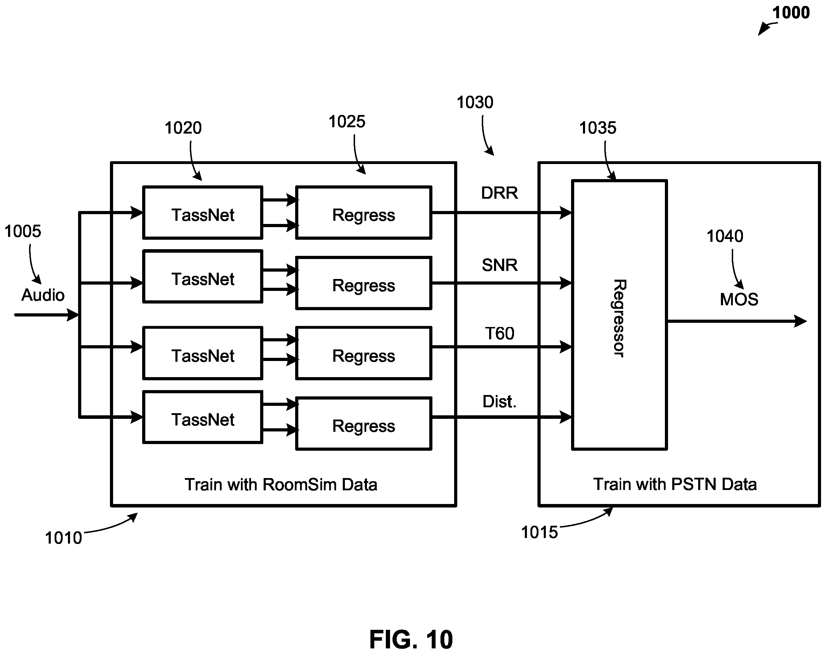

FIG. 10 is a diagram illustrating an example explainable voice-quality detector model, in accordance with example embodiments. Input audio 1005 may be received by block 1010 for training with RoomSim data. Block 1010 may include one or more TasNet blocks 1020 and one or more Regress blocks 1025. The two outputs of each TasNet block 1020 are the putative speech and noise signals, and these are fed into the one or more Regress blocks 1025. The one or more Regress blocks 1025 can independently provide outputs 1030 to block 1015 for training with the Microsoft/TU Berlin Public Switched Telephone Network (PSTN) data. The outputs 1030 may include DRR (used to estimate the distance of a sound source), signal-to-noise ratio (SNR), T60 (the time it takes for the RIR to decay by 60 dB from the level of the direct path), and distance based sound separation. However, the regressor 1035 can drive these signals to change their representation to generate the MOS 1040.

*Training with RoomSim*

In some embodiments, feature detectors may be trained with public audio processed by a room simulator. The clean speech may be from the Libri-Light dataset for training and from Libri-TTS for evaluation. Non-speech sounds may be used from a variety of publicly available resources, including freesound.org. Freesound is a collaborative database of sounds licensed by the Creative Commons (CC). As another example, audio from the Free Universal Sound Separation (FUSS) dataset may be used. For audio from Freesound, artificial sounds (such as synthesizer noises) may be filtered out based on user annotated tags. Also, for example, a sound classification network may be trained on AudioSet to avoid clips likely containing speech. During training, sources may be reverberated and mixed on the fly, and the validation and test sets may each be based on about 9 hours of speech data.

Room impulse responses (RIRs) may be generated with an image-method room simulator with frequency-dependent wall filters. For each example, the RIR can be generated by sampling random locations for a microphone and sound sources within a room defined using a random size, such as, with a width from 3 to 7 m, length from 4 to 8 m, and height between 2.13 and 3.05 m. During RIR generation, source "image" locations may be randomly perturbed (e.g., by up to 8 cm in each direction) to avoid a "sweeping echo" effect.

In some embodiments, 140,000 training, 20,000 validation datasets may be generated, along with 20,000 test rooms that are used to generate train, validate and test data. The speech and noise can be "recorded" in rooms with simulated impulse response between the location of a source and a microphone. In some embodiments, a random speech signal may be selected, three random noises may be selected, and a random room size may be selected, and the sound sources and microphone can be placed at random in the room. Random gains can be applied to the sources that result in speech with an average level (e.g., of XX dB) relative to full scale with standard deviation (e.g., of sXX dB). The non-speech noise has an average level of YY dB with standard deviation sYY dB.

*Physical Degradations*

In some embodiments, the ground truth may be determined for the features as the room's environment is mixed and simulated. The SNR is the power of the chosen speech signal divided by the power of all the noise signals, in dB. The RIR defines both a direct path, the height of the first peak in the RIR, and the reverberant signals, and later peaks. The DRR is then the power in the first RIR peak, divided by the sum of all the other peaks, measured in dB.

Determination of the T60 time, the time it takes for the RIR to decay by 60 dB from the level of the direct path, can also be done from the RIR. In order to perform this calculation robustly, in the face of a noise floor, linear regression may be applied in the log domain on the RIR. This regression can be carried out over the "valid" portions of the RIR, for example, by removing everything to just after the first (direct) response, and deleting the points after the noise floor. A line may be fit to the remaining points in the log domain to estimate the slope of the reverberation decay, and the T60 time may be estimated from this.

Also, for example, the distance from the speech source to the microphone is a known quantity since the RoomSim calculation picks these two positions at random, and the true distance can be determined based on this.

*MOS Data*

In some embodiments, models to estimate MOS 1040 may be determined using three datasets from the *Conferencing Speech 2022 challenge.* Example datasets are:

PSTN: A random subset of the PSTN data. For example, the PSTN data provides MOS data for 58709 10 s samples of speech with added noise that is also corrupted by various telephone network connections. This dataset has an MOS estimate based on an average of 4.6 human judgements.

NISQA: The NISQA corpus file data, also from TU Berlin.

Tencent: The without Reverberation Train Dev MOS portion of the Tencent data.

An average MOS estimate, the 95% confidence interval, and the number of judgements for each sample may be provided. From this information the inter-subject agreement can be determined and the standard deviation of human estimates of the MOS may be estimated as 0.86.

*Models: Feature Models*

As illustrated in FIG. 10, a convolutional TasNet architecture 1020 can be used. TasNet 1020 can be configured to learn what speech looks like, and generate a mask that separates the speech from the noise. In speech enhancement tasks, TasNet 1020 may be configured to predict a time-frequency mask, which is applied to the original signal to predict a clean signal, and from this a mean-squared loss may be computed.

In the feature detectors, the "speech" and the "noise" outputs of the TasNet network may be combined with the following operations: ReLU that involves dividing "speech" energy by "noise" energy and then taking the logarithm to form a feature estimate. The "speech" and "noise" signals are in quotes because that is their role in the normal speech-enhancement network. However, in the voice-quality models described herein, as each physical feature model is trained end-to-end, the network is free to use these signals in any form as long as the final feature output is moving towards the desired value. The same architecture can be used to estimate SNR (+/- 40dB), DRR (+/- 40dB), T60 (0-1s) or distance (0-20m).

The input to the physical feature networks can be audio that have been segmented into 8s frames. The RoomSim calculation 1010 can be part of the training pipeline so it can be efficiently executed on a TPU. In some embodiments, for each trial, the chosen (random) speech and noise signals may be convolved with the RIR for the chosen source and microphone positions to form the received microphone signals. In some embodiments, a small bias may be added to the logs and divisions so that the results are finite. In some embodiments, the network may be trained to a configuration close to a final performance in a short time (e.g., less than a day using $4 \times 2$ arrays of TPUs).

*Models: MOS Models*

Regressor 1035 can be linear or DNN and may be configured to predict a MOS 1040 from the physical estimates. In some embodiments, a linear regression can provide a more intuitive model since the decision factors are linear weights, but a linear regressor may not perform as well as a non-linear regressor. Thus, for better results a 3 layer DNN may be used, with 10 hidden units, batch normalization, and skip connections. A model may be trained for each dataset using 80% of the physical data inferred from that dataset, and then test the model on the remaining 20%.

The results may be described in three ways: feature prediction accuracy, MOS predictor accuracy, and explaining MOS via known degradations.

*Results: Feature predictors*

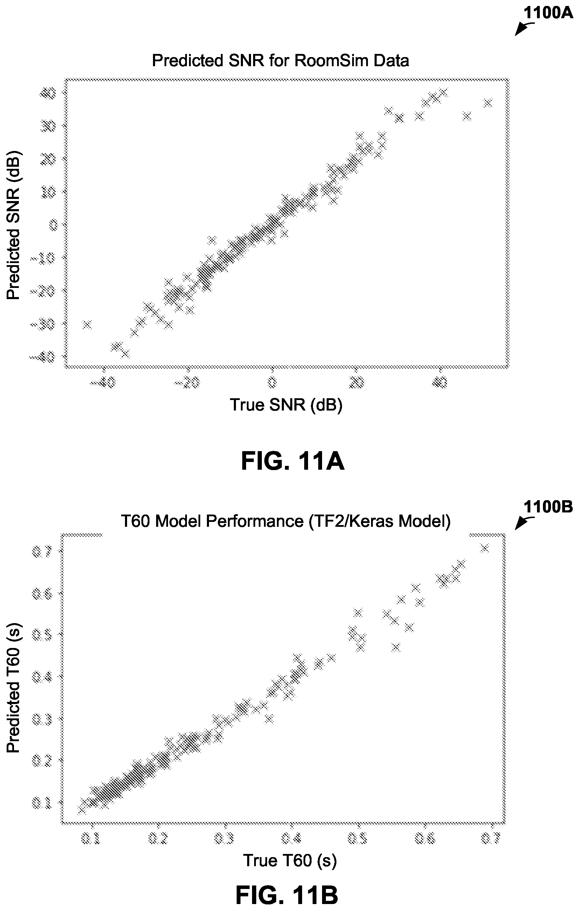

In some embodiments, four different feature predictor networks may be trained, one for each of the current features: SNR, DRR, T60 and distance. Performance of these networks may be evaluated on a separate validation set (and/or on simulated data). FIGS. 11A-D illustrate scatter plots for each of these feature predictors.

FIG. 11A is an example scatter plot 1300A illustrating a prediction performance for SNR, in accordance with example embodiments. The horizontal axis represents the true SNR in dB and the vertical axis represents the predicted SNR in dB. The SNR model achieves a correlation of 96% and an error with a standard deviation of +/-15dB.

FIG. 11B is an example scatter plot 1300B illustrating a prediction performance for T60, in accordance with example embodiments. The horizontal axis represents the true T60 in seconds and the vertical axis represents the predicted T60 in seconds. The T60 model achieves a correlation of 99% and an error with a standard deviation of 130ms. The same architecture that was used to predict power above is predicting a time. The T60 time is a function of the room geometry and wall reflectivity, and is generally not under the user's control. In some embodiments, the log of T60 may be predicted as a relevant measure.

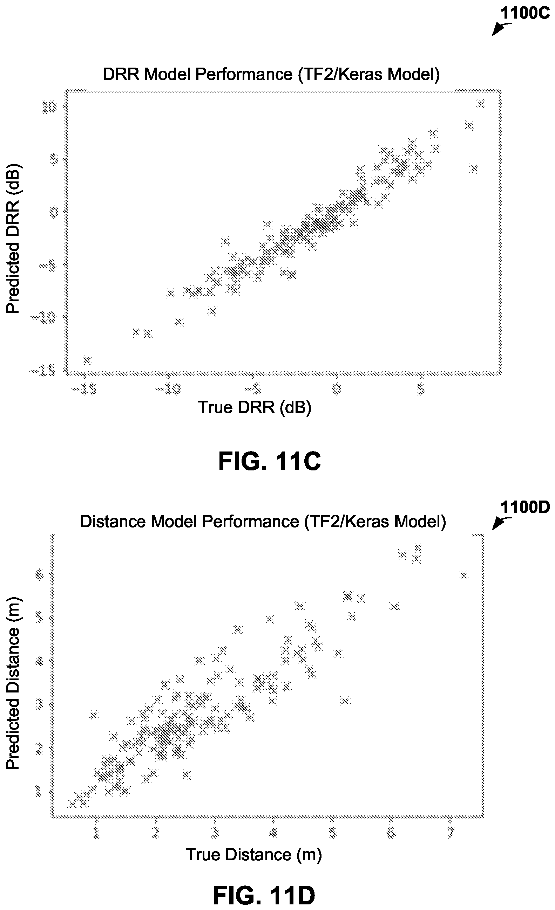

FIG. 11C is an example scatter plot 1300C illustrating a prediction performance for DRR, in accordance with example embodiments. The horizontal axis represents the true DRR in dB and the vertical axis represents the predicted DRR in dB. The DRR describes how much of the received signal is due to direct path and a high DRR suggests that the speaker is close to the microphone, and the direct path dominates over reverberations. The model provides a correlation of 97%, and the error has a standard deviation of 1.5dB. As described with reference to FIG. 1B and 1C, the DRR may be used to estimate a distance of a source, and an audio mix may be separated into near and far sounds based on the estimated distance.

FIG. 11D is an example scatter plot 1300D illustrating a prediction performance based on distance using RoomSim data, in accordance with example embodiments. The horizontal axis represents the true distance in meters and the vertical axis represents the predicted distance in meters. The distance predictions appear to have an 89% correlation with the true results and are lower than preceding measures. The standard deviation of the errors is about 1m, and the log of distance may be determined as an estimate.

*Results: MOS predictors*

In some embodiments, the estimates of four physical features may be combined into a model for MOS using linear and DNN regressors. In some embodiments, separate linear and DNN models may be generated for each dataset. With a full DNN model using the PSTN data, a root-mean-squared error (RMSE) of 0.67 may be achieved. This compares favorably with the inter-subject standard deviation of the human data (0.86). For comparison purposes, a DNN model may be trained and tested using just the NISQA VAL SIM data from NISQA. Using the 10,000 utterances supplied, a Pearson correlation between the predicted and expected MOS of 0.63 and RMSE of 0.85 may be achieved.

Also, for example, a relative significance of features may be determined by building and testing the MOS models with a subset of the physical features. The correlation between the true and the predicted MOS is then a measure of the importance of that feature set to the true MOS. With reference to FIGS. 11A-D, SNR appears to be a significant feature, followed by DRR, and distance (which is related to DRR), and T60 appears to be much less important, perhaps because humans may not perceive reverberation due to the precedence effect, at least within the range of T60 values in the training and evaluation sets. A correlation of 67%, which may be achieved using just the SNR estimate, indicates an r2 of 43%, suggesting that 43% of the variance in the MOS data may be explained by the SNR estimates. The DRR estimates explain a couple more percentages. In effect such an ablation study demonstrates, on average, how different physical features factor into the average human MOS judgements.

*Explaining MOS via degradations*

The model described herein may be analyzed by artificially generating a range of feature values and measuring the MOS predictions. Generally, the MOS may be higher for high SNR and DRR. The default values used, when not on the grid, can be DRR = 0dB, SNR = 10dB, T60 = 400ms, distance = 2m.).

An explainable model for voice quality can have various applications. For example, a user who is recording a conversation may be provided with actionable feedback that allows them to improve their audio or video recordings. Also, for example, system engineers may want to know when the noise or distortion is large, which might indicate that there are transmission problems. The quality of the MOS estimator may be adjusted by adding additional physically quantifiable features, such as degradations from the codec, transmission errors, speech intelligibility, and so on. Also, for example, more sophisticated network components, such as attention and non-linear pooling may be added.

Generally speaking, explainability may be a more desirable quantity to measure than absolute accuracy, especially as humans are limited to a five-point scale and the ambiguity that comes with differentiating between noise and reverberation is more important to quality. In some embodiments, a separate full TasNet model may be used for each predictor. The number of superblocks may be reduced from 4 to 1 and the number of blocks within a superblock.

**Example Applications**

The model described herein can perform distance based sound separation. The model can determine a distance threshold to identify one or more near sounds and one or more far sounds. In some embodiments, the distance threshold can be a learnable hyperparameter of the neural network.

In some embodiments, the distance threshold may be input by a user via an interactive graphical user interface. For example, the model may recommend one or more suggested distance thresholds to the user, and the user may select one of the suggested distance thresholds. As another example, the user may input the distance threshold (e.g., using a slidable bar). In some embodiments, a virtual model of the user location in an environment may be provided, and the user may use a graphic object (e.g., an adjustable circle, ellipse, a free form boundary diagram, and so forth) to input the distance threshold. For example, the user may be provided with a graphic illustration of a first table at a restaurant where the user is seated with two other individuals, and one or more additional tables. The user may select the table, the two other individuals, and/or draw a boundary around the table and the two other individuals to indicate a distance threshold.

In some embodiments, the neural network can perform one or more of suppressing nearby sounds, suppressing far sounds, enhancing near sounds, enhancing far sounds.

In some embodiments, the neural network can be combined with an audio separation network that separates one or more sources of sound from audio mixture, and the neural network can then identify the one or more near sounds and the one or more far sounds based on the separated one or more sources of sound (e.g., using distance estimation). Also, for example, subsequent to the near and far sounds being identified, an audio separation network can separate the near and far sounds into respective component tracks.

In some embodiments, an audio separation network can separate one or more sources of sound, and the distances of the one or more sources of sound may be estimated (e.g., by a distance estimation neural network), and the neural network can then identify the one or more near sounds and the one or more far sounds based on the estimated distances.

Also, for example, the model may reside on a mobile device and perform distance based sound separation.

Also, for example, the model may reside at a remote server to perform distance based sound separation for audio received at a computing device.

Generally speaking, the techniques may be applied to assisted listening devices, intelligent voice assistants, intelligent speaker calibration, robotic control circuitry (e.g., identifying one or more near objects and/or one or more far objects based on sound separation), autonomous and semi-autonomous driving (e.g., identifying one or more near traffic sounds and one or more far traffic sounds), intelligent cameras, security and/or surveillance cameras, and so forth.

**Training Machine Learning Models for Generating Inferences/Predictions**

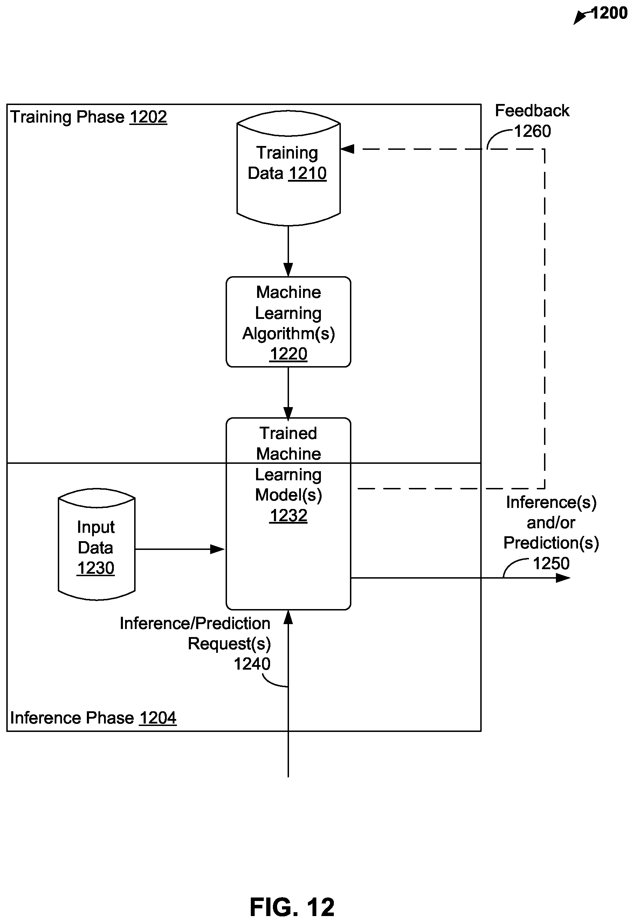

FIG. 12 shows diagram 1200 illustrating a training phase 1202 and an inference phase 1204 of trained machine learning model(s) 1232, in accordance with example embodiments. Some machine learning techniques involve training one or more machine learning algorithms on an input set of training data to recognize patterns in the training data and provide output inferences and/or predictions about (patterns in the) training data. The resulting trained machine learning algorithm can be termed as a trained machine learning model. For example, FIG. 12 shows training phase 1202 where one or more machine learning algorithms 1220 are being trained on training data 1210 to become trained machine learning model(s) 1232. Then, during inference phase 1204, trained machine learning model(s) 1232 can receive input data 1230 and one or more inference/prediction requests 1240 (perhaps as part of input data 1230) and responsively provide as an output one or more inferences and/or prediction(s) 1250.

As such, trained machine learning model(s) 1232 can include one or more models of one or more machine learning algorithms 1220. Machine learning algorithm(s) 1220 may include, but are not limited to: an artificial neural network (e.g., a herein-described convolutional neural networks, a recurrent neural network, a Bayesian network, a hidden Markov model, a Markov decision process, a logistic regression function, a support vector machine, a suitable statistical machine learning algorithm, and/or a heuristic machine learning system). Machine learning algorithm(s) 1220 may be supervised or unsupervised, and may implement any suitable combination of online and offline learning.

In some examples, machine learning algorithm(s) 1220 and/or trained machine learning model(s) 1232 can be accelerated using on-device coprocessors, such as graphic processing units (GPUs), tensor processing units (TPUs), digital signal processors (DSPs), and/or application specific integrated circuits (ASICs). Such on-device coprocessors can be used to speed up machine learning algorithm(s) 1220 and/or trained machine learning model(s) 1232. In some examples, trained machine learning model(s) 1232 can be trained, reside on, and be executed, to provide inferences on a particular computing device, and/or otherwise can make inferences for the particular computing device.

During training phase 1202, machine learning algorithm(s) 1220 can be trained by providing at least training data 1210 as training input using unsupervised, supervised, semi-supervised, and/or reinforcement learning techniques. Unsupervised learning involves providing a portion (or all) of training data 1210 to machine learning algorithm(s) 1220 and machine learning algorithm(s) 1220 determining one or more output inferences based on the provided portion (or all) of training data 1210. Supervised learning involves providing a portion of training data 1210 to machine learning algorithm(s) 1220, with machine learning algorithm(s) 1220 determining one or more output inferences based on the provided portion of training data 1210, and the output inference(s) are either accepted or corrected based on correct results associated with training data 1210. In some examples, supervised learning of machine learning algorithm(s) 1220 can be governed by a set of rules and/or a set of labels for the training input, and the set of rules and/or set of labels may be used to correct inferences of machine learning algorithm(s) 1220.

Semi-supervised learning involves having correct results for part, but not all, of training data 1210. During semi-supervised learning, supervised learning is used for a portion of training data 1210 having correct results, and unsupervised learning is used for a portion of training data 1210 not having correct results. Reinforcement learning involves machine learning algorithm(s) 1220 receiving a reward signal regarding a prior inference, where the reward signal can be a numerical value. During reinforcement learning, machine learning algorithm(s) 1220 can output an inference and receive a reward signal in response, where machine learning algorithm(s) 1220 are configured to try to maximize the numerical value of the reward signal. In some examples, reinforcement learning also utilizes a value function that provides a numerical value representing an expected total of the numerical values provided by the reward signal over time. In some examples, machine learning algorithm(s) 1220 and/or trained machine learning model(s) 1232 can be trained using other machine learning techniques, including but not limited to, incremental learning and curriculum learning.

In some examples, machine learning algorithm(s) 1220 and/or trained machine learning model(s) 1232 can use transfer learning techniques. For example, transfer learning techniques can involve trained machine learning model(s) 1232 being pre-trained on one set of data and additionally trained using training data 1210. More particularly, machine learning algorithm(s) 1220 can be pre-trained on data from one or more computing devices and a resulting trained machine learning model provided to computing device CD1, where CD1 is intended to execute the trained machine learning model during inference phase 1204. Then, during training phase 1202, the pre-trained machine learning model can be additionally trained using training data 1210, where training data 1210 can be derived from kernel and non-kernel data of computing device CD1. This further training of the machine learning algorithm(s) 1220 and/or the pre-trained machine learning model using training data 1210 of CD1's data can be performed using either supervised or unsupervised learning. Once machine learning algorithm(s) 1220 and/or the pre-trained machine learning model has been trained on at least training data 1210, training phase 1202 can be completed. The trained resulting machine learning model can be utilized as at least one of trained machine learning model(s) 1232. Training data 1210 can be a plurality of audio mixtures, wherein each audio mixture comprises one or more first sounds that are proximate to the audio input component, and one or more second sounds that are not proximate to the audio input component.

In particular, once training phase 1202 has been completed, trained machine learning model(s) 1232 can be provided to a computing device, if not already on the computing device. Inference phase 1204 can begin after trained machine learning model(s) 1232 are provided to computing device CD1.

During inference phase 1204, trained machine learning model(s) 1232 can receive input data 1230 and generate and output one or more corresponding inferences and/or prediction(s) 1250 about input data 1230. As such, input data 1230 can be used as an input to trained machine learning model(s) 1232 for providing corresponding inference(s) and/or prediction(s) 1250 to kernel components and non-kernel components. For example, trained machine learning model(s) 1232 can generate inference(s) and/or prediction(s) 1250 in response to one or more inference/prediction requests 1240. In some examples, trained machine learning model(s) 1232 can be executed by a portion of other software. For example, trained machine learning model(s) 1232 can be executed by an inference or prediction daemon to be readily available to provide inferences and/or predictions upon request. Input data 1230 can include data from computing device CD1 executing trained machine learning model(s) 1232 and/or input data from one or more computing devices other than CD1. For example, input data 1230 can include an audio mixture from one or more sources received by an audio input component of a computing device. Other types of input data are possible as well.

Inference(s) and/or prediction(s) 1250 can include output audio, output intermediate audio, numerical values, and/or other output data produced by trained machine learning model(s) 1232 operating on input data 1230 (and training data 1210). In some examples, trained machine learning model(s) 1232 can use output inference(s) and/or prediction(s) 1250 as input feedback 1160. Trained machine learning model(s) 1232 can also rely on past inferences as inputs for generating new inferences.

A neural network for distance based sound separation can be an example of machine learning algorithm(s) 1220. A neural network for distance estimation of sound sources in an audio mixture can be an example of machine learning algorithm(s) 1220. A neural network for separation of sound sources in the audio mixture can be an example of machine learning algorithm(s) 1220. After training, the trained version of the neural network can be an example of trained machine learning model(s) 1232. In this approach, an example of the one or more inference / prediction request(s) 1240 can be a request to predict the one or more near sounds and the one or more far sounds and a corresponding example of inferences and/or prediction(s) 1250 can be the predicted one or more near sounds and the one or more far sounds.

In some examples, one computing device CD_SOLO can include one or more of the trained versions of the distance based sound separation network, a distance estimation network, or an audio separation network, perhaps after training. Then, computing device CD_SOLO can receive a request to predict the one or more near sounds and the one or more far sounds, and use the trained version of the neural network to predict the one or more near sounds and the one or more far sounds.

In some examples, two or more computing devices CD_CLI and CD_SRV can be used to provide output audio; *e.g.,* a first computing device CD_CLI can generate and send requests to predict the one or more near sounds and the one or more far sounds to a second computing device CD_SRV. Then, CD_SRV can use the trained version of the neural network, to predict the one or more near sounds and the one or more far sounds, and respond to the requests from CD_CLI for the predicted one or more near sounds and the one or more far sounds. Then, upon reception of responses to the requests, CD_CLI can provide the requested predicted one or more near sounds and the one or more far sounds (e.g., using a user interface and/or a display, a printed copy, an electronic communication, etc.).

**Example Data Network**

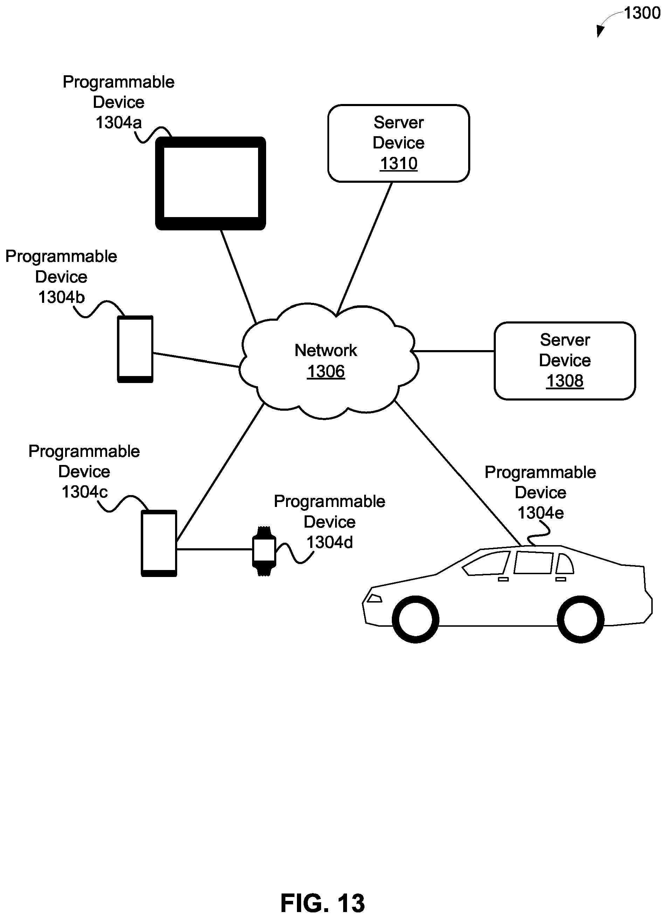

FIG. 13 depicts a distributed computing architecture 1300, in accordance with example embodiments. Distributed computing architecture 1300 includes server devices 1308, 1310 that are configured to communicate, via network 1306, with programmable devices 1304a, 1304b, 1304c, 1304d, 1304e. Network 1306 may correspond to a local area network (LAN), a wide area network (WAN), a WLAN, a WWAN, a corporate intranet, the public Internet, or any other type of network configured to provide a communications path between networked computing devices. Network 1306 may also correspond to a combination of one or more LANs, WANs, corporate intranets, and/or the public Internet.

Although FIG. 13 only shows five programmable devices, distributed application architectures may serve tens, hundreds, or thousands of programmable devices. Moreover, programmable devices 1304a, 1304b, 1304c, 1304d, 1304e (or any additional programmable devices) may be any sort of computing device, such as a mobile computing device, desktop computer, wearable computing device, head-mountable device (HMD), network terminal, a mobile computing device, and so on. In some examples, such as illustrated by programmable devices 1304a, 1304b, 1304c, 1304e, programmable devices can be directly connected to network 1306. In other examples, such as illustrated by programmable device 1304d, programmable devices can be indirectly connected to network 1306 via an associated computing device, such as programmable device 1304c. In this example, programmable device 1304c can act as an associated computing device to pass electronic communications between programmable device 1304d and network 1306. In other examples, such as illustrated by programmable device 1304e, a computing device can be part of and/or inside a vehicle, such as a car, a truck, a bus, a boat or ship, an airplane, etc. In other examples not shown in FIG. 13, a programmable device can be both directly and indirectly connected to network 1306.

Server devices 1308, 1310 can be configured to perform one or more services, as requested by programmable devices 1304a-1304e. For example, server device 1308 and/or 1310 can provide content to programmable devices 1304a-1304e. The content can include, but is not limited to, web pages, hypertext, scripts, binary data such as compiled software, images, audio, and/or video. The content can include compressed and/or uncompressed content. The content can be encrypted and/or unencrypted. Other types of content are possible as well.

As another example, server device 1308 and/or 1310 can provide programmable devices 1304a-1304e with access to software for database, search, computation, graphical, audio, video, World Wide Web/Internet utilization, and/or other functions. Many other examples of server devices are possible as well.

**Computing Device Architecture**

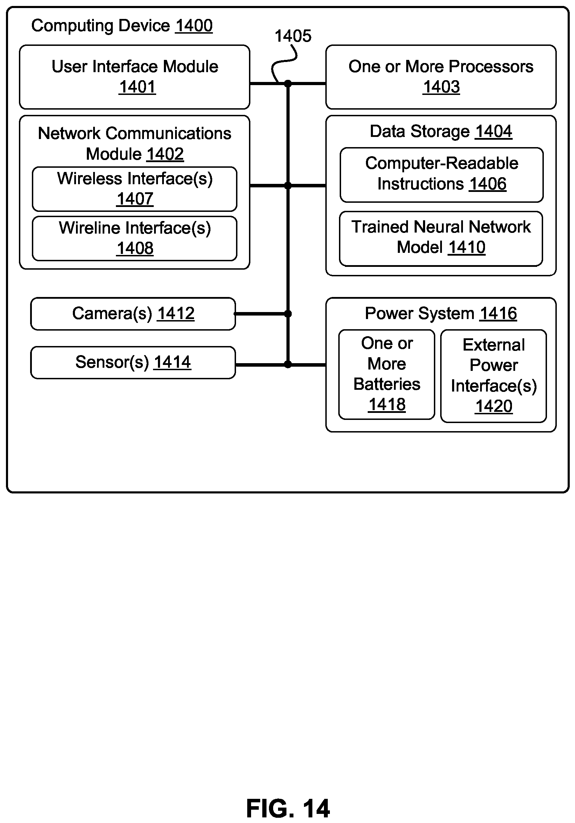

FIG. 14 is a block diagram of an example computing device 1400, in accordance with example embodiments. In particular, computing device 1400 shown in FIG. 14 can be configured to perform at least one function for distance based sound separation, and/or method 1600, and/or 1700.

Computing device 1400 may include a user interface module 1401, a network communications module 1402, one or more processors 1403, data storage 1404, one or more camera(s) 1412, one or more sensors 1414, and power system 1416, all of which may be linked together via a system bus, network, or other connection mechanism 1405.

User interface module 1401 can be operable to send data to and/or receive data from external user input/output devices. For example, user interface module 1401 can be configured to send and/or receive data to and/or from user input devices such as a touch screen, a computer mouse, a keyboard, a keypad, a touch pad, a trackball, a joystick, a voice recognition module, and/or other similar devices. User interface module 1401 can also be configured to provide output to user display devices, such as one or more cathode ray tubes (CRT), liquid crystal displays, light emitting diodes (LEDs), displays using digital light processing (DLP) technology, printers, light bulbs, and/or other similar devices, either now known or later developed. User interface module 1401 can also be configured to generate audible outputs, with devices such as a speaker, speaker jack, audio output port, audio output device, earphones, and/or other similar devices. User interface module 1401 can further be configured with one or more haptic devices that can generate haptic outputs, such as vibrations and/or other outputs detectable by touch and/or physical contact with computing device 1400. In some examples, user interface module 1401 can be used to provide a graphical user interface (GUI) for utilizing computing device 1400, such as, for example, a graphical user interface of a mobile phone device. In some examples, user interface module 1401 can be used to provide a user-adjustable control to receive a threshold distance.

Network communications module 1402 can include one or more devices that provide one or more wireless interface(s) 1407 and/or one or more wireline interface(s) 1408 that are configurable to communicate via a network. Wireless interface(s) 1407 can include one or more wireless transmitters, receivers, and/or transceivers, such as a Bluetooth™ transceiver, a Zigbee® transceiver, a Wi-Fi™ transceiver, a WiMAX™ transceiver, an LTE™ transceiver, and/or other type of wireless transceiver configurable to communicate via a wireless network. Wireline interface(s) 1408 can include one or more wireline transmitters, receivers, and/or transceivers, such as an Ethernet transceiver, a Universal Serial Bus (USB) transceiver, or similar transceiver configurable to communicate via a twisted pair wire, a coaxial cable, a fiberoptic link, or a similar physical connection to a wireline network.

In some examples, network communications module 1402 can be configured to provide reliable, secured, and/or authenticated communications. For each communication described herein, information for facilitating reliable communications (*e.g.*, guaranteed message delivery) can be provided, perhaps as part of a message header and/or footer (*e.g.,* packet/message sequencing information, encapsulation headers and/or footers, size/time information, and transmission verification information such as cyclic redundancy check (CRC) and/or parity check values). Communications can be made secure (*e.g.,* be encoded or encrypted) and/or decrypted/decoded using one or more cryptographic protocols and/or algorithms, such as, but not limited to, Data Encryption Standard (DES), Advanced Encryption Standard (AES), a Rivest-Shamir-Adelman (RSA) algorithm, a Diffie-Hellman algorithm, a secure sockets protocol such as Secure Sockets Layer (SSL) or Transport Layer Security (TLS), and/or Digital Signature Algorithm (DSA). Other cryptographic protocols and/or algorithms can be used as well or in addition to those listed herein to secure (and then decrypt/decode) communications.

One or more processors 1403 can include one or more general purpose processors, and/or one or more special purpose processors (e.g., digital signal processors, tensor processing units (TPUs), graphics processing units (GPUs), application specific integrated circuits, etc.). One or more processors 1403 can be configured to execute computer-readable instructions 1306 that are contained in data storage 1404 and/or other instructions as described herein.

Data storage 1404 can include one or more non-transitory computer-readable storage media that can be read and/or accessed by at least one of one or more processors 1403. The one or more computer-readable storage media can include volatile and/or non-volatile storage components, such as optical, magnetic, organic or other memory or disc storage, which can be integrated in whole or in part with at least one of one or more processors 1403. In some examples, data storage 1404 can be implemented using a single physical device (*e.g.,* one optical, magnetic, organic or other memory or disc storage unit), while in other examples, data storage 1404 can be implemented using two or more physical

18

devices.

Data storage 1404 can include computer-readable instructions 1406 and perhaps additional data. In some examples, data storage 1404 can include storage required to perform at least part of the herein-described methods, scenarios, and techniques and/or at least part of the functionality of the herein-described devices and networks. In some examples, data storage 1404 can include storage for a trained neural network model 1410 (*e.g.,* a model of trained neural networks such as a vision and language model). In particular of these examples, computer-readable instructions 1406 can include instructions that, when executed by one or more processors 1403, enable computing device 1400 to provide for some or all of the functionality of trained neural network model 1410.

In some examples, computing device 1400 can include one or more camera(s) 1412. Camera(s) 1412 can include one or more image capture devices, such as still and/or video cameras, equipped to capture light and record the captured light in one or more images; that is, camera(s) 1412 can generate image(s) of captured light. The one or more images can be one or more still images and/or one or more images utilized in video imagery. Camera(s) 1412 can capture light and/or electromagnetic radiation emitted as visible light, infrared radiation, ultraviolet light, and/or as one or more other frequencies of light.

In some examples, computing device 1400 can include one or more sensors 1414. Sensors 1414 can be configured to measure conditions within computing device 1400 and/or conditions in an environment of computing device 1400 and provide data about these conditions. For example, sensors 1414 can include one or more of: (i) sensors for obtaining data about computing device 1400, such as, but not limited to, a thermometer for measuring a temperature of computing device 1400, a battery sensor for measuring power of one or more batteries of power system 1416, and/or other sensors measuring conditions of computing device 1400; (ii) an identification sensor to identify other objects and/or devices, such as, but not limited to, a Radio Frequency Identification (RFID) reader, proximity sensor, one-dimensional barcode reader, two-dimensional barcode (e.g., Quick Response (QR) code) reader, and a laser tracker, where the identification sensors can be configured to read identifiers, such as RFID tags, barcodes, QR codes, and/or other devices and/or object configured to be read and provide at least identifying information; (iii) sensors to measure locations and/or movements of computing device 1400, such as, but not limited to, a tilt sensor, a gyroscope, an accelerometer, a Doppler sensor, a GPS device, a sonar sensor, a radar device, a laser-displacement sensor, and a compass; (iv) an environmental sensor to obtain data indicative of an environment of computing device 1400, such as, but not limited to, an infrared sensor, an optical sensor, a light sensor, a biosensor, a capacitive sensor, a touch sensor, a temperature sensor, a wireless sensor, a radio sensor, a movement sensor, a microphone, a sound sensor, an ultrasound sensor and/or a smoke sensor; and/or (v) a force sensor to measure one or more forces (*e.g.*, inertial forces and/or G-forces) acting about computing device 1400, such as, but not limited to one or more sensors that measure: forces in one or more dimensions, torque, ground force, friction, and/or a zero moment point (ZMP) sensor that identifies ZMPs and/or locations of the ZMPs. Many other examples of sensors 1414 are possible as well.

Power system 1416 can include one or more batteries 1418 and/or one or more external power interfaces 1420 for providing electrical power to computing device 1400. Each battery of the one or more batteries 1418 can, when electrically coupled to the computing device 1400, act as a source of stored electrical power for computing device 1400. One or more batteries 1418 of power system 1416 can be configured to be portable. Some or all of one or more batteries 1418 can be readily removable from computing device 1400. In other examples, some or all of one or more batteries 1418 can be internal to computing device 1400, and so may not be readily removable from computing device 1400. Some or all of one or more batteries 1418 can be rechargeable. For example, a rechargeable battery can be recharged via a wired connection between the battery and another power supply, such as by one or more power supplies that are external to computing device 1400 and connected to computing device 1400 via the one or more external power interfaces. In other examples, some or all of one or more batteries 1418 can be non-rechargeable batteries.

One or more external power interfaces 1420 of power system 1416 can include one or more wired-power interfaces, such as a USB cable and/or a power cord, that enable wired electrical power connections to one or more power supplies that are external to computing device 1400. One or more external power interfaces 1420 can include one or more wireless power interfaces, such as a Qi wireless charger, that enable wireless electrical power connections, such as via a Qi wireless charger, to one or more external power supplies. Once an electrical power connection is established to an external power source using one or more external power interfaces 1420, computing device 1400 can draw electrical power from the external power source the established electrical power connection. In some examples, power system 1416 can include related sensors, such as battery sensors associated with the one or more batteries or other types of electrical power sensors.

## Cloud-Based Servers

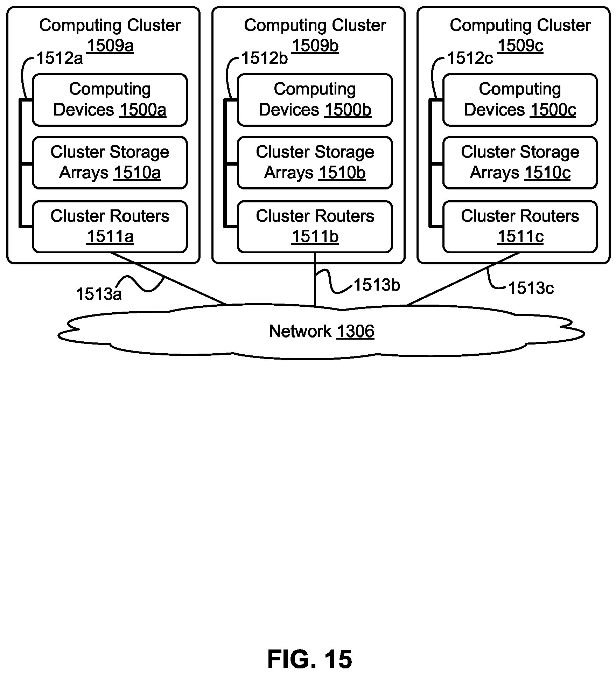

FIG. 15 depicts a cloud-based server system in accordance with an example embodiment. In FIG. 15, functionality of distance based sound separation, and/or a computing device can be distributed among computing clusters 1509a, 1509b, 1509c. Computing cluster 1509a can include one or more computing devices 1500a, cluster storage arrays 1510a, and cluster routers 1511 connected by a local cluster network 1512a. Similarly, computing cluster 1509b can include one or more computing devices 1500b, cluster storage arrays 1510b, and cluster routers 1511b connected by a local cluster network 1512b. Likewise, computing cluster 1509c can include one or more computing devices 1500c, cluster storage arrays 1510c, and cluster routers 1511c connected by a local cluster network 1512c.

In some embodiments, computing clusters 1509a, 1509b, 1509c can be a single computing device residing in a single computing center. In other embodiments, computing clusters 1509a, 1509b, 1509c can include multiple computing devices in a single computing center, or even multiple computing devices located in multiple computing centers located in diverse geographic locations. For example, FIG. 15 depicts each of computing clusters 1509a, 1509b, 1509c residing in different physical locations.

In some embodiments, data and services at computing clusters 1509a, 1509b, 1509c can be encoded as computer readable information stored in non-transitory, tangible computer readable media (or computer readable storage media) and accessible by other computing devices. In some embodiments, computing clusters 1509a, 1509b, 1509c can be stored on a single disk drive or other tangible storage media, or can be implemented on multiple disk drives or other tangible storage media located at one or more diverse geographic locations.

In some embodiments, each of computing clusters 1509a, 1509b, and 1509c can have an equal number of computing devices, an equal number of cluster storage arrays, and an equal number of cluster routers. In other embodiments, however, each computing cluster can have different numbers of computing devices, different numbers of cluster storage arrays, and different numbers of cluster routers. The number of computing devices, cluster storage arrays, and cluster routers in each computing cluster can depend on the computing task or tasks assigned to each computing cluster.

In computing cluster 1509a, for example, computing devices 1500a can be configured to perform various computing tasks of a distance based sound separation neural network, an audio separation network, a distance estimation network, and/or a computing device. In one embodiment, the various functionalities of a neural network, and/or a computing device can be distributed among one or more of computing devices 1500a, 1500b, 1500c. Computing devices 1500b and 1500c in respective computing clusters 1509b and 1509c can be configured similarly to computing devices 1500a in computing cluster 1509a. On the other hand, in some embodiments, computing devices 1500a, 1500b, and 1500c can be configured to perform different functions.

In some embodiments, computing tasks and stored data associated with a distance based sound separation neural network, an audio separation network, a distance estimation network, and/or a computing device can be distributed across computing devices 1500a, 1500b, and 1500c based at least in part on the processing requirements of a neural network, and/or a computing device, the processing capabilities of computing devices 1500a, 1500b, 1500c, the latency of the network links between the computing devices in each computing cluster and between the computing clusters themselves, and/or other factors that can contribute to the cost, speed, fault-tolerance, resiliency, efficiency, and/or other design goals of the overall system architecture.

Cluster storage arrays 1510a, 1510b, 1510c of computing clusters 1509a, 1509b, 1509c can be data storage arrays that include disk array controllers configured to manage read and write access to groups of hard disk drives. The disk array controllers, alone or in conjunction with their respective computing devices, can also be configured to manage backup or redundant copies of the data stored in the cluster storage arrays to protect against disk drive or other cluster storage array failures and/or network failures that prevent one or more computing devices from accessing one or more cluster storage arrays.

Similar to the manner in which the functions of a distance based sound separation neural network, an audio separation network, a distance estimation network, and/or a computing device can be distributed across computing devices 1500a, 1500b, 1500c of computing clusters 1509a, 1509b, 1509c, various active portions and/or backup portions of these components can be distributed across cluster storage arrays 1510a, 1510b, 1510c. For example, some cluster storage arrays can be configured to store one portion of the data of a first layer of a neural network, and/or a computing device, while other cluster storage arrays can store other portion(s) of data of second layer of a neural network, and/or a computing device. Also, for example, some cluster storage arrays can be configured to store the data of an encoder of a neural network, while other cluster storage arrays can store the data of a decoder of a neural network. Additionally, some cluster storage arrays can be configured to store backup versions of data stored in other cluster storage arrays.

Cluster routers 1511a, 1511b, 1511c in computing clusters 1509a, 1509b, 1509c can include networking equipment configured to provide internal and external communications for the computing clusters. For example, cluster routers 1511a in computing cluster 1509a can include one or more internet switching and routing devices configured to provide (i) local area network communications between computing devices 1500a and cluster storage arrays 1510a via local cluster network 1512a, and (ii) wide area network communications between computing cluster 1509a and computing clusters 1509b and 1509c via wide area network link 1513a to network 1306. Cluster routers 1511b and 1511c can include network equipment similar to cluster routers 1511a, and cluster routers 1511b and 1511c can perform similar networking functions for computing clusters 1509b and 1509b that cluster routers 1511a perform for computing cluster 1509a.

In some embodiments, the configuration of cluster routers 1511a, 1511b, 1511c can be based at least in part on the data communication requirements of the computing devices and cluster storage arrays, the data communications capabilities of the network equipment in cluster routers 1511a, 1511b, 1511c, the latency and throughput of local cluster networks 1512a, 112b, 1512c, the latency, throughput, and cost of wide area network links 1513a, 1513b, 1513c, and/or other factors that can contribute to the cost, speed, fault-tolerance, resiliency, efficiency and/or other design criteria of the moderation system architecture.

**Example Methods of Operation**

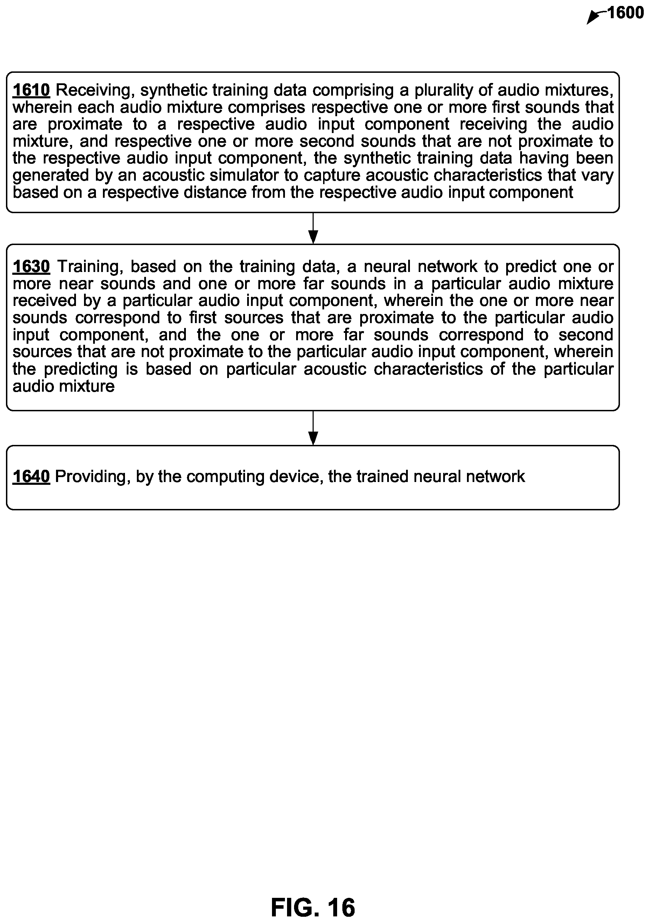

FIG. 16 is a flowchart of a method 1600, in accordance with example embodiments. Method 1600 can be executed by a computing device, such as computing device 1400. Method 1600 can begin at block 1610, where the method involves receiving, by a computing device, synthetic training data comprising a plurality of audio mixtures, wherein each audio mixture comprises respective one or more first sounds that are proximate to a respective audio input component receiving the audio mixture, and respective one or more second sounds that are not proximate to the respective audio input component, the synthetic training data having been generated by an acoustic simulator to capture acoustic characteristics that vary based on a respective distance from the respective audio input component.

At block 1620, the method involves training, based on the training data, a neural network to predict one or more near sounds and one or more far sounds in a particular audio mixture received by a particular audio input component, wherein the one or more near sounds correspond to first sources that are proximate to the particular audio input component, and the one or more far sounds correspond to second sources that are not proximate to the particular audio input component, wherein the predicting is based on particular acoustic characteristics of the particular audio mixture.

At block 1630, the method involves providing, by the computing device, the trained neural network.

In some embodiments, the neural network may be a convolutional neural network.

In some embodiments, the neural network may be a recurrent neural network.

In some embodiments, the neural network may be a Long Short-Term Memory (LSTM) network.

In some embodiments, the proximity to the particular audio input component may be based on a threshold distance. The threshold distance may be a learnable hyperparameter of the neural network.

In some embodiments, training may be based on a scale-invariant signal to distortion ratio (SI-SDR).

In some embodiments, the acoustic simulator may be an image-method room simulator with frequency dependent wall filters.

Some embodiments involve generating the plurality of mixtures by reproducing, by the acoustic simulator, one or more acoustic properties of the one or more first sounds and the one or more second sounds.

Some embodiments involve generating, by the acoustic simulator, one or more reverb impulse responses (RIRs) for a room, wherein the room is associated with a plurality of acoustic properties. In some embodiments, a location of the audio input component in the room may be randomized. In some embodiments, a location of one or more sources of the one or more first sounds and the one or more second sounds is randomized.

In some embodiments, the plurality of mixtures may include human speech.

In some embodiments, the training of the neural network involves training an audio separation neural network to separate the audio mixture into one or more sounds corresponding to the one or more sources. Such embodiments involve estimating, by a distance estimation network, a distance of each of the one or more sources from the audio input component, and the predicting of the one or more near sounds and the one or more far sounds may be based on the estimated distance.

In some embodiments, the training of the neural network may be performed at the computing device.

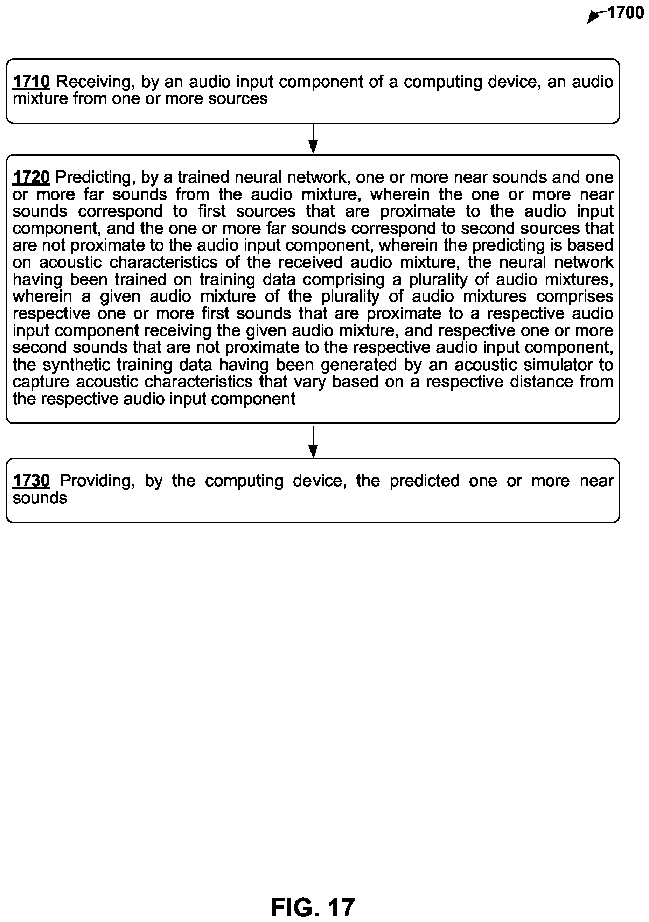

FIG. 17 is a flowchart of a method 1700, in accordance with example embodiments. Method 1700 can be executed by a computing device, such as computing device 1400. Method 1700 can begin at block 1710, where the method involves receiving, by an audio input component of a computing device, an audio mixture from one or more sources.

At block 1720, the method involves predicting, by the trained neural network, one or more near sounds and one or more far sounds from the audio mixture, wherein the one or more near sounds correspond to first sources that are proximate to the audio input component, and the one or more far sounds correspond to second sources that are not proximate to the audio input component, wherein the predicting is based on acoustic characteristics of the received audio mixture, the neural network having been trained on training data comprising a plurality of audio mixtures, wherein a given audio mixture of the plurality of audio mixtures comprises respective one or more first sounds that are proximate to a respective audio input component receiving the given audio mixture, and respective one or more second sounds that are not proximate to the respective audio input component, the synthetic training data having been generated by an acoustic simulator to capture acoustic characteristics that vary based on a respective distance from the respective audio input component.

At block 1730, the method involves providing, by the computing device, the predicted one or more near sounds.

Some embodiments involve separating, by a trained audio separation neural network, the audio mixture into one or more sounds corresponding to the one or more sources. Such embodiments involve estimating, by the neural network and based on the one or more separated sounds, a distance of each of the one or more sources from the audio input component, and the predicting of the one or more near sounds and the one or more far sounds may be based on the estimated distance.

In some embodiments, the neural network may be a convolutional neural network.

In some embodiments, the neural network may be a recurrent neural network.

In some embodiments, the neural network may be a Long Short-Term Memory (LSTM) network.

In some embodiments, the proximity to the audio input component may be based on a threshold distance, and the method involves providing, by an interactive graphical user interface of the computing device, a user-adjustable control to receive the threshold distance.

Some embodiments involve receiving, by the user-adjustable control, a particular threshold distance input by a user of the computing device, and the providing of the predicted one or more near sounds and the one or more far sounds may be based on the particular threshold distance.

In some embodiments, the providing of the predicted one or more near sounds involves suppressing, by the computing device, at least one of the one or more near sounds.

In some embodiments, the providing of the predicted one or more near sounds involves suppressing, by the computing device, at least one of the one or more far sounds.

In some embodiments, the providing of the predicted one or more near sounds involves enhancing, by the computing device, at least one of the one or more near sounds.

Some embodiments involve providing, by the computing device, the predicted one or more far sounds.

Some embodiments involve determining, by the computing device, a request to predict the one or more near sounds and the one or more far sounds. Such embodiments involve sending the request to predict the one or more near sounds and the one or more far sounds from the computing device to a second computing device, the second computing device comprising a trained version of the neural network. Such embodiments also involve, after sending the request, the computing device receiving, from the second computing device, the predicted one or more near sounds and the one or more far sounds, and the providing of the predicted one or more near sounds and the one or more far sounds involves providing the predicted one or more near sounds and the one or more far sounds as received from the second computing device.

Some embodiments involve obtaining a trained neural network at the computing device, and the predicting of the one or more near sounds and the one or more far sounds involves predicting by the computing device using the trained neural network.

In some embodiments, the audio mixture may include human speech.

The present disclosure is not to be limited in terms of the particular embodiments described in this application, which are intended as illustrations of various aspects. Many modifications and variations can be made without departing from the scope of the appended claims.

The above detailed description describes various features and functions of the disclosed systems, devices, and methods with reference to the accompanying figures. In the figures, similar symbols typically identify similar components, unless context dictates otherwise. The illustrative embodiments described in the detailed description, figures, and claims are not meant to be limiting. Other embodiments can be utilized, and other changes can be made, without departing from the spirit or scope of the subject matter presented herein. It will be readily understood that the aspects of the present disclosure, as generally described herein, and illustrated in the figures, can be arranged, substituted, combined, separated, and designed in a wide variety of different configurations, all of which are explicitly contemplated herein.

With respect to any or all of the ladder diagrams, scenarios, and flow charts in the figures and as discussed herein, each block and/or communication may represent a processing of information and/or a transmission of information in accordance with example embodiments. Alternative embodiments are included within the scope of these example embodiments. In these alternative embodiments, for example, functions described as blocks, transmissions, communications, requests, responses, and/or messages may be executed out of order from that shown or discussed, including substantially concurrent or in reverse order, depending on the functionality involved. Further, more or fewer blocks and/or functions may be used with any of the ladder diagrams, scenarios, and flow charts discussed herein, and these ladder diagrams, scenarios, and flow charts may be combined with one another, in part or in whole.

A block that represents a processing of information may correspond to circuitry that can be configured to perform the specific logical functions of a herein-described method or technique. Alternatively or additionally, a block that represents a processing of information may correspond to a module, a segment, or a portion of program code (including related data). The program code may include one or more instructions executable by a processor for implementing specific logical functions or actions in the method or technique. The program code and/or related data may be stored on any type of computer readable medium such as a storage device including a disk or hard drive or other storage medium.

The computer readable medium may also include non-transitory computer readable media such as non-transitory computer-readable media that stores data for short periods of time like register memory, processor cache, and random access memory (RAM). The computer readable media may also include non-transitory computer readable media that stores program code and/or data for longer periods of time, such as secondary or persistent long term storage, like read only memory (ROM), optical or magnetic disks, compact-disc read only memory (CD-ROM), for example. The computer readable media may also be any other volatile or non-volatile storage systems. A computer readable medium may be considered a computer readable storage medium, for example, or a tangible storage device.

Moreover, a block that represents one or more information transmissions may correspond to information transmissions between software and/or hardware modules in the same physical device. However, other information transmissions may be between software modules and/or hardware modules in different physical devices.

While various aspects and embodiments have been disclosed herein, other aspects and embodiments will be apparent to those skilled in the art. The various aspects and embodiments disclosed herein are provided for explanatory purposes and are not intended to be limiting, with the true scope being indicated by the following claims.

**Claims**

1. A computer-implemented method (1600) for distance based sound separation, comprising:

   receiving (1610), by a computing device (1400), synthetic training data comprising a plurality of audio mixtures, wherein each audio mixture comprises respective one or more first sounds (115A) that are proximate to a respective audio input component receiving the audio mixture, and respective one or more second sounds (125A, 120A) that are not proximate to the respective audio input component, the synthetic training data having been generated by an acoustic simulator to capture acoustic characteristics that vary based on a respective distance from the respective audio input component;

   training (1630), based on the training data, a neural network (135) to predict one or more near sounds (140) and one or more far sounds (145) in an input audio mixture received by a particular audio input component, wherein the one or more near sounds correspond to first sources (115) that are proximate to the particular audio input component, and the one or more far sounds correspond to second sources (120, 125) that are not proximate to the particular audio input component, wherein the predicting is based on acoustic characteristics of the input audio mixture, **characterised in that**

   training the neural network further comprises:

      training an audio separation neural network (155) to separate the input audio mixture into one or more sounds corresponding to the one or more sources; and

      training a distance estimation network (150) to estimate a distance of each of the one or more sources from the particular audio input component,

      wherein the predicting of the one or more near sounds and the one or more far sounds is based on the estimated distance; and

   providing (1640), by the computing device, the trained neural network.

2. The computer-implemented method of claim 1, wherein:

   the proximity to the particular audio input component is based on a threshold distance (110), wherein the threshold distance is a learnable hyperparameter of the neural network; or

   the training is based on a scale-invariant signal to distortion ratio, SI-SDR.

3. The computer-implemented method of claim 1, wherein the acoustic simulator is an image-method room simulator with frequency dependent wall filters, or wherein the method further comprises:

   generating the plurality of mixtures by reproducing, by the acoustic simulator, one or more acoustic properties of the one or more first sounds and the one or more second sounds.

4. The computer-implemented method of claim 1, further comprising:

   generating, by the acoustic simulator, one or more reverb impulse responses, RIRs, for a room, wherein the room is associated with a plurality of acoustic properties, wherein optionally a location of the audio input component in the room is randomized or a location of one or more sources of the one or more first sounds and the one or more second sounds is randomized.

5. The computer-implemented method of claim 1, wherein the plurality of mixtures comprises human speech and/or wherein the training of the neural network is performed at the computing device.

6. A computer-implemented method of applying a trained neural network (135) for distance based sound separation, comprising:

receiving (1710), by an audio input component of a computing device (1400), an audio mixture from one or more sources;

predicting (1720), by the trained neural network, one or more near sounds (140) and one or more far sounds (145) from the audio mixture, wherein the one or more near sounds correspond to first sources (115) that are proximate to the audio input component, and the one or more far sounds correspond to second sources (120, 125) that are not proximate to the audio input component, wherein the predicting is based on acoustic characteristics of the received audio mixture, the neural network having been trained on training data comprising a plurality of audio mixtures, wherein a given audio mixture of the plurality of audio mixtures comprises respective one or more first sounds (115A) that are proximate to a respective audio input component receiving the given audio mixture, and respective one or more second sounds (125A, 120A) that are not proximate to the respective audio input component, the synthetic training data having been generated by an acoustic simulator to capture acoustic characteristics that vary based on a respective distance from the respective audio input component; and

providing (1730), by the computing device, the predicted one or more near sounds; the method **characterised in that** it further comprises:

separating, by a trained audio separation neural network (155), the audio mixture into one or more sounds corresponding to the one or more sources;

estimating, by a trained distance estimation model (150) of the neural network and based on the one or more separated sounds, a distance of each of the one or more sources from the audio input component, and wherein the predicting of the one or more near sounds and the one or more far sounds is based on the estimated distance.

7. The computer-implemented method of claim 6, wherein the proximity to the audio input component is based on a threshold distance (110), and further comprising:

providing, by an interactive graphical user interface of the computing device, a user-adjustable control to receive the threshold distance, wherein optionally the method further comprises:

receiving, by the user-adjustable control, an input threshold distance input by a user of the computing device, and wherein the providing of the predicted one or more near sounds and the one or more far sounds is based on the input threshold distance.

8. The computer-implemented method of claim 6, wherein the providing of the predicted one or more near sounds further comprises:

suppressing, by the computing device, at least one of the one or more near sounds;

suppressing, by the computing device, at least one of the one or more far sounds; or

enhancing, by the computing device, at least one of the one or more near sounds.

9. The computer-implemented method of claim 6, wherein the audio mixture comprises human speech and/or wherein the method further comprises:

providing, by the computing device, the predicted one or more far sounds.

10. The computer-implemented method of claim 6, further comprising:

determining, by the computing device, a request to predict the one or more near sounds and the one or more far sounds;

sending the request to predict the one or more near sounds and the one or more far sounds from the computing device to a second computing device, the second computing device comprising a trained version of the neural network;

after sending the request, the computing device receiving, from the second computing device, the predicted one or more near sounds and the one or more far sounds, and

wherein the providing of the predicted one or more near sounds and the one or more far sounds comprises providing the predicted one or more near sounds and the one or more far sounds as received from the second computing device.

11. The computer-implemented method of claim 6, further comprising:

obtaining a trained neural network at the computing device, and
wherein the predicting of the one or more near sounds and the one or more far sounds comprises predicting by the computing device using the trained neural network.

12. A computing device (1400), comprising:

one or more processors (1403); and
data storage (1404), wherein the data storage has stored thereon computer-executable instructions that, when executed by the one or more processors, cause the computing device to carry out functions comprising the computer-implemented method of any one of claims 1-11, wherein optionally the computing device is a mobile phone.

13. A computer program comprising instructions that, when executed by a computer, cause the computer to perform steps in accordance with the method of any one of claims 1-11.

14. An article of manufacture comprising one or more non-transitory computer readable media having computer-readable instructions stored thereon that, when executed by one or more processors of a computing device, cause the computing device to carry out functions that comprise the computer-implemented method of any one of claims 1-11.

15. A system, comprising:
means for carrying out the computer-implemented method of any one of claims 1-11.


**Patentansprüche**

1. Computerimplementiertes Verfahren (1600) zur entfernungsbasierten Klangtrennung, umfassend:

Empfangen (1610), durch eine Rechenvorrichtung (1400), synthetischer Trainingsdaten, die eine Vielzahl von Audiomischungen umfassen, wobei jede Audiomischung jeweilige einen oder mehrere erste Klänge (115A), die nahe zu einer jeweiligen die Audiomischung empfangenden Audioeingabekomponente sind, und jeweilige einen oder mehrere zweite Klänge (125A, 120A), die nicht nahe zu der jeweiligen Audioeingabekomponente sind, umfasst, wobei die synthetischen Trainingsdaten durch einen Akustiksimulator erzeugt worden sind, um akustische Merkmale zu erfassen, die basierend auf einer jeweiligen Entfernung von der jeweiligen Audioeingabekomponente variieren;
Trainieren (1630), basierend auf den Trainingsdaten, eines neuronalen Netzwerks (135) zum Vorhersagen eines oder mehrerer Nahklänge (140) und eines oder mehrerer Fernklänge (145) in einer durch eine bestimmte Audioeingabekomponente empfangenen Eingangsaudiomischung, wobei der eine oder die mehreren Nahklänge ersten Quellen (115) entsprechen, die nahe zu der bestimmten Audioeingabekomponente sind, und der eine oder die mehreren Fernklänge zweiten Quellen (120, 125) entsprechen, die nicht nahe zu der bestimmten Audioeingabekomponente sind, wobei das Vorhersagen auf akustischen Merkmalen der Eingangsaudiomischung basiert, **dadurch gekennzeichnet, dass** Trainieren des neuronalen Netzwerks ferner umfasst:

Trainieren eines neuronalen Audiotrennungsnetzwerks (155) zum Trennen der Eingangsaudiomischung in einen oder mehrere Klänge, die der einen oder den mehreren Quellen entsprechen; und
Trainieren eines Entfernungsschätznetzwerks (150) zum Schätzen einer Entfernung jeder der einen oder mehreren Quellen von der bestimmten Audioeingabekomponente,
wobei das Vorhersagen des einen oder der mehreren Nahklänge und des einen oder der mehreren Fernklänge auf der geschätzten Entfernung basiert; und
Bereitstellen (1640), durch die Rechenvorrichtung, des trainierten neuronalen Netzwerks.

2. Computerimplementiertes Verfahren nach Anspruch 1, wobei:

die Nähe zu der bestimmten Audioeingabekomponente auf einer Schwellenentfernung (110) basiert, wobei die Schwellenentfernung ein lernbarer Hyperparameter des neuronalen Netzwerks ist; oder

das Trainieren auf einem skaleninvarianten Signal-Verzerrungs-Verhältnis, SI-SDR (scale-invariant signal to distortion ratio), basiert.

3. Computerimplementiertes Verfahren nach Anspruch 1, wobei der Akustiksimulator ein Spiegelquellenmethoden-Raumsimulator mit frequenzabhängigen Wandfiltern ist, oder wobei das Verfahren ferner umfasst:
Erzeugen der Vielzahl von Mischungen durch Reproduzieren, durch den Akustiksimulator, einer oder mehrerer akustischer Eigenschaften des einen oder der mehreren ersten Klänge und des einen oder der mehreren zweiten Klänge.

4. Computerimplementiertes Verfahren nach Anspruch 1, ferner umfassend:
Erzeugen, durch den Akustiksimulator, einer oder mehrerer Nachhallimpulsantworten, Nachhallimpulsantworten (RIRs - reverb impulse responses), für einen Raum, wobei der Raum mit einer Vielzahl von akustischen Eigenschaften assoziiert ist, wobei optional ein Standort der Audioeingabekomponente in dem Raum randomisiert ist oder ein Standort einer oder mehrerer Quellen des einen oder der mehreren ersten Klänge und des einen oder der mehreren zweiten Klänge randomisiert ist.

5. Computerimplementiertes Verfahren nach Anspruch 1, wobei die Vielzahl von Mischungen menschliche Sprache umfasst und/oder wobei das Trainieren des neuronalen Netzwerks an der Rechenvorrichtung durchgeführt wird.

6. Computerimplementiertes Verfahren zum Anwenden eines trainierten neuronalen Netzwerks (135) zur entfernungsbasierten Klangtrennung, umfassend:

Empfangen (1710), durch eine Audioeingabekomponente einer Rechenvorrichtung (1400), einer Audiomischung von einer oder mehreren Quellen;
Vorhersagen (1720), durch das trainierte neuronale Netzwerk, eines oder mehrerer Nahklänge (140) und eines oder mehrerer Fernklänge (145) aus der Audiomischung, wobei der eine oder die mehreren Nahklänge ersten Quellen (115) entsprechen, die nahe zu der Audioeingabekomponente sind, und der eine oder die mehreren Fernklänge zweiten Quellen (120, 125) entsprechen, die nicht nahe zu der Audioeingabekomponente sind, wobei das Vorhersagen auf akustischen Merkmalen der empfangenen Audiomischung basiert, wobei das neuronale Netzwerk auf Trainingsdaten trainiert wurde, die eine Vielzahl von Audiomischungen umfassen, wobei eine gegebene Audiomischung der Vielzahl von Audiomischungen jeweilige einen oder mehrere erste Klänge (115A), die nahe zu einer jeweiligen die gegebene Audiomischung empfangenden Audioeingabekomponente sind, und jeweilige einen oder mehrere zweite Klänge (125A, 120A), die nicht nahe zu der jeweiligen Audioeingabekomponente sind, umfasst, wobei die synthetischen Trainingsdaten durch einen Akustiksimulator erzeugt worden sind, um akustische Merkmale zu erfassen, die basierend auf einer jeweiligen Entfernung von der jeweiligen Audioeingabekomponente variieren; und
Bereitstellen (1730), durch die Rechenvorrichtung, des vorhergesagten einen oder der vorhergesagten mehreren Nahklänge;
wobei das Verfahren **dadurch gekennzeichnet ist, dass** es ferner umfasst:

Trennen, durch ein trainiertes neuronales Audiotrennungsnetzwerk (155), der Audiomischung in einen oder mehrere Klänge, die der einen oder den mehreren Quellen entsprechen;
Schätzen, durch ein trainiertes Entfernungsschätzmodell (150) des neuronalen Netzwerks und basierend auf dem einen oder den mehreren getrennten Klängen, einer Entfernung jeder der einen oder mehreren Quellen von der Audioeingabekomponente, und
wobei das Vorhersagen des einen oder der mehreren Nahklänge und des einen oder der mehreren Fernklänge auf der geschätzten Entfernung basiert.

7. Computerimplementiertes Verfahren nach Anspruch 6, wobei die Nähe zu der Audioeingabekomponente auf einer Schwellenentfernung (110) basiert, und ferner umfassend:
Bereitstellen, durch eine interaktive grafische Benutzeroberfläche der Rechenvorrichtung, eines benutzereinstellbaren Steuerelements zum Empfangen der Schwellenentfernung, wobei optional das Verfahren ferner umfasst:

Empfangen, durch das benutzereinstellbare Steuerelement, einer durch einen Benutzer der Rechenvorrichtung eingegebenen Eingabeschwellenentfernung, und
wobei das Bereitstellen des vorhergesagten einen oder der vorhergesagten mehreren Nahklänge und des einen oder der mehreren Fernklänge auf der Eingabeschwellenentfernung basiert.

8. Computerimplementiertes Verfahren nach Anspruch 6, wobei das Bereitstellen des vorhergesagten einen oder der vorhergesagten mehreren Nahklänge ferner umfasst:

Unterdrücken, durch die Rechenvorrichtung, mindestens eines von dem einen oder den mehreren Nahklängen;
Unterdrücken, durch die Rechenvorrichtung, mindestens eines von dem einen oder den mehreren Fernklängen; oder
Verstärken, durch die Rechenvorrichtung, mindestens eines von dem einen oder den mehreren Nahklängen.

9. Computerimplementiertes Verfahren nach Anspruch 6, wobei die Audiomischung menschliche Sprache umfasst und/oder wobei das Verfahren ferner umfasst:
Bereitstellen, durch die Rechenvorrichtung, des vorhergesagten einen oder der vorhergesagten mehreren Fernklänge.

10. Computerimplementiertes Verfahren nach Anspruch 6, ferner umfassend:

Bestimmen, durch die Rechenvorrichtung, einer Anforderung zum Vorhersagen des einen oder der mehreren Nahklänge und des einen oder der mehreren Fernklänge;
Senden der Anforderung zum Vorhersagen des einen oder der mehreren Nahklänge und des einen oder der mehreren Fernklänge von der Rechenvorrichtung an eine zweite Rechenvorrichtung, wobei die zweite Rechenvorrichtung eine trainierte Version des neuronalen Netzwerks umfasst;
nach Senden der Anforderung, Empfangen, durch die Rechenvorrichtung, von der zweiten Rechenvorrichtung, des vorhergesagten einen oder der vorhergesagten mehreren Nahklänge und des einen oder der mehreren Fernklänge, und
wobei das Bereitstellen des vorhergesagten einen oder der vorhergesagten mehreren Nahklänge und des einen oder der mehreren Fernklänge Bereitstellen des vorhergesagten einen oder der vorhergesagten mehreren Nahklänge und des einen oder der mehreren Fernklänge, wie von der zweiten Rechenvorrichtung empfangen, umfasst.

11. Computerimplementiertes Verfahren nach Anspruch 6, ferner umfassend:

Erhalten eines trainierten neuronalen Netzwerks an der Rechenvorrichtung, und
wobei das Vorhersagen des einen oder der mehreren Nahklänge und des einen oder der mehreren Fernklänge Vorhersagen durch die Rechenvorrichtung unter Verwendung des trainierten neuronalen Netzwerks umfasst.

12. Rechenvorrichtung (1400), umfassend:

einen oder mehrere Prozessoren (1403); und
einen Datenspeicher (1404), wobei der Datenspeicher darauf gespeicherte computerausführbare Anweisungen aufweist, die, wenn sie durch den einen oder die mehreren Prozessoren ausgeführt werden, die Rechenvorrichtung veranlassen, Funktionen auszuführen, die das computerimplementierte Verfahren nach einem der Ansprüche 1-11 umfassen, wobei die Rechenvorrichtung optional ein Mobiltelefon ist.

13. Computerprogramm, umfassend Anweisungen, die, wenn sie durch einen Computer ausgeführt werden, den Computer veranlassen, Schritte gemäß dem Verfahren nach einem der Ansprüche 1-11 durchzuführen.

14. Herstellungsgegenstand, umfassend ein oder mehrere nichtflüchtige computerlesbare Medien, die darauf gespeicherte computerlesbare Anweisungen aufweisen, die, wenn sie durch einen oder mehrere Prozessoren einer Rechenvorrichtung ausgeführt werden, die Rechenvorrichtung veranlassen, Funktionen auszuführen, die das computerimplementierte Verfahren nach einem der Ansprüche 1-11 umfassen.

15. System, umfassend:
Mittel zum Ausführen des computerimplementierten Verfahrens nach einem der Ansprüche 1-11.

**Revendications**

1. Procédé mis en œuvre par ordinateur (1600) de séparation de sons basée sur la distance, comprenant :

la réception (1610), par un dispositif informatique (1400), de données d'entraînement synthétiques comprenant une pluralité de mélanges audio, dans lequel chaque mélange audio comprend un ou plusieurs premiers sons (115A) respectifs qui sont proches d'un composant d'entrée audio respectif recevant le mélange audio, et un ou plusieurs seconds sons (125A, 120A) qui ne sont pas proches du composant d'entrée audio respectif, les données d'entraînement synthétiques ayant été générées par un simulateur acoustique pour capturer des caractéristiques acoustiques qui varient sur la base d'une distance respective par rapport au composant d'entrée audio respectif ;

l'entraînement (1630), sur la base des données d'entraînement, d'un réseau neuronal (135) permet de prédire un ou plusieurs sons proches (140) et un ou plusieurs sons éloignés (145) dans un mélange audio d'entrée reçu par un composant d'entrée audio particulier, dans lequel les un ou plusieurs sons proches correspondent à des premières sources (115) proches du composant d'entrée audio particulier, et les un ou plusieurs sons éloignés correspondent à des secondes sources (120, 125) non proches du composant d'entrée audio particulier, dans lequel la prédiction est basée sur les caractéristiques acoustiques du mélange audio d'entrée, **caractérisé en ce que** l'entraînement du réseau neuronal comprend en outre :

l'entraînement d'un réseau neuronal de séparation de sons (155) pour séparer le mélange audio d'entrée en un ou plusieurs sons correspondant à une ou à plusieurs sources ; et

l'entraînement d'un réseau d'estimation de distance (150) pour estimer la distance de chacune des une ou plusieurs sources par rapport au composant d'entrée audio particulier,

dans lequel la prédiction des un ou plusieurs sons proches et des un ou plusieurs sons éloignés est basée sur la distance estimée ; et

la fourniture (1640), par le dispositif informatique, du réseau neuronal entraîné.

2. Procédé mis en œuvre par ordinateur selon la revendication 1, dans lequel :

la proximité du composant d'entrée audio particulier est basée sur une distance seuil (110), dans lequel la distance seuil est un hyperparamètre apprenable du réseau neuronal ; ou

la formation est basée sur un rapport signal sur distorsion invariant d'échelle, SI-SDR.

3. Procédé mis en œuvre par ordinateur selon la revendication 1, dans lequel le simulateur acoustique est un simulateur de pièce par procédé d'imagerie avec des filtres muraux dépendant de la fréquence, ou dans lequel le procédé comprend en outre :

la génération de la pluralité de mélanges en reproduisant, par le simulateur acoustique, une ou plusieurs propriétés acoustiques des un ou plusieurs premiers sons et des un ou plusieurs seconds sons.

4. Procédé mis en œuvre par ordinateur selon la revendication 1, comprenant en outre :

la génération, par le simulateur acoustique, d'une ou de plusieurs réponses impulsionnelles de réverbération, RIR, pour une pièce, dans lequel la pièce est associée à une pluralité de propriétés acoustiques, dans lequel, éventuellement, un emplacement du composant d'entrée audio dans la pièce est aléatoire ou un emplacement d'une ou de plusieurs sources des un ou plusieurs premiers sons et des un ou plusieurs seconds sons est aléatoire.

5. Procédé mis en œuvre par ordinateur selon la revendication 1, dans lequel la pluralité de mélanges comprend la parole humaine et/ou dans lequel l'entraînement du réseau neuronal est effectué sur le dispositif informatique.

6. Procédé mis en œuvre par ordinateur d'application d'un réseau neuronal entraîné (135) pour la séparation de sons basée sur la distance, comprenant :

la réception (1710), par un composant d'entrée audio d'un dispositif informatique (1400), d'un mélange audio provenant d'une ou de plusieurs sources ;

la prédiction (1720), par le réseau neuronal entraîné, d'un ou de plusieurs sons proches (140) et d'un ou de plusieurs sons éloignés (145) en provenance du mélange audio, dans lequel les un ou plusieurs sons proches correspondent à des premières sources (115) proches du composant d'entrée audio, et les un ou plusieurs sons éloignés correspondent à des secondes sources (120, 125) qui ne sont pas proches du composant d'entrée audio, dans lequel la prédiction est basée sur des caractéristiques acoustiques du mélange audio reçu, le réseau neuronal ayant été entraîné sur des données d'entraînement comprenant une pluralité de mélanges audio, dans lequel un mélange audio donné de la pluralité de mélanges audio comprend un ou plusieurs premiers sons (115A) respectifs proches d'un composant d'entrée audio respectif recevant le mélange audio donné, et un ou plusieurs seconds sons (125A, 120A) respectifs qui ne sont pas proches du composant d'entrée audio respectif, les données d'entraînement synthétiques ayant été générées par un simulateur acoustique pour capturer des caractéristiques acoustiques qui varient sur la base d'une distance respective par rapport au composant d'entrée audio respectif ; et
la fourniture (1730), par le dispositif informatique, des un ou plusieurs sons proches prédits ; le procédé étant **caractérisé en ce qu'**il comprend en outre :

la séparation, par un réseau neuronal de séparation de sons entraîné (155), du mélange audio en un ou plusieurs sons correspondant à une ou à plusieurs sources ;
l'estimation, par un modèle d'estimation de distance entraîné (150) du réseau neuronal et sur la base des un ou plusieurs sons séparés, d'une distance de chacune des une ou plusieurs sources par rapport au composant d'entrée audio, et
dans lequel la prédiction d'un ou de plusieurs sons proches et d'un ou de plusieurs sons éloignés est basée sur la distance estimée.

7. Procédé mis en œuvre par ordinateur selon la revendication 6, dans lequel la proximité du composant d'entrée audio est basée sur une distance seuil (110), et comprenant en outre :
la fourniture, par le biais d'une interface utilisateur graphique interactive du dispositif informatique, d'une commande réglable par l'utilisateur pour recevoir la distance seuil, dans lequel, éventuellement, le procédé comprend en outre :

la réception, par la commande réglable par l'utilisateur, d'une entrée de distance seuil d'entrée par un utilisateur du dispositif informatique, et
dans lequel la fourniture des un ou plusieurs sons proches et des un ou plusieurs sons éloignés prédits est basée sur la distance seuil d'entrée.

8. Procédé mis en œuvre par ordinateur selon la revendication 6, dans lequel la fourniture des un ou plusieurs sons proches prédits comprend en outre :

la suppression, par le dispositif informatique, d'au moins l'un des un ou plusieurs sons proches ;
la suppression, par le dispositif informatique, d'au moins l'un des un ou plusieurs sons éloignés ; ou
l'amélioration, par le dispositif informatique, d'au moins l'un des un ou plusieurs sons proches.

9. Procédé mis en œuvre par ordinateur selon la revendication 6, dans lequel le mélange audio comprend de la parole humaine et/ou dans lequel le procédé comprend en outre :
la fourniture, par le dispositif informatique, des un ou plusieurs sons éloignés prédits.

10. Procédé mis en œuvre par ordinateur selon la revendication 6, comprenant en outre :

la détermination, par le dispositif informatique, d'une demande de prédiction des un ou plusieurs sons proches et des un ou plusieurs sons éloignés ;
l'envoi de la demande de prédiction des un ou plusieurs sons proches et des un ou plusieurs sons éloignés du dispositif informatique à un second dispositif informatique, le second dispositif informatique comprenant une version entraînée du réseau neuronal ;
après l'envoi de la demande, la réception, par le dispositif informatique en provenance du second dispositif informatique, des un ou plusieurs sons proches et des un ou plusieurs sons éloignés prédits, et
dans lequel la fourniture des un ou plusieurs sons proches et des un ou plusieurs sons éloignés prédits comprend la fourniture des un ou plusieurs sons proches et des un ou plusieurs sons éloignés prédits tels que reçus depuis le second dispositif informatique.

11. Procédé mis en œuvre par ordinateur selon la revendication 6, comprenant en outre :

l'obtention d'un réseau neuronal entraîné sur le dispositif informatique, et
dans lequel la prédiction des un ou plusieurs sons proches et des un ou plusieurs sons éloignés comprend la prédiction par le dispositif informatique à l'aide du réseau neuronal entraîné.

12. Dispositif informatique (1400), comprenant :

un ou plusieurs processeurs (1403) ; et
un stockage de données (1404), dans lequel le stockage de données contient des instructions exécutables par ordinateur stockées dans celui-ci qui, lorsqu'elles sont exécutées par les un ou plusieurs processeurs, amènent le dispositif informatique à réaliser des fonctions comprenant le procédé mis en œuvre par ordinateur selon l'une quelconque des revendications 1 à 11, dans lequel, éventuellement, le dispositif informatique est un téléphone mobile.

13. Programme informatique comprenant des instructions qui, lorsqu'elles sont exécutées par un ordinateur, amènent l'ordinateur à effectuer des étapes conformément au procédé de l'une quelconque des revendications 1 à 11.

14. Article manufacturé comprenant un ou plusieurs supports non transitoires lisibles par ordinateur ayant des instructions lisibles par ordinateur stockées dans ceux-ci qui, lorsqu'elles sont exécutées par un ou plusieurs processeurs d'un dispositif informatique, amènent le dispositif informatique à réaliser des fonctions qui comprennent le procédé mis en œuvre par ordinateur selon l'une quelconque des revendications 1 à 11.

15. Système, comprenant :
des moyens de mise en œuvre du procédé mis en œuvre par ordinateur selon l'une quelconque des revendications 1 à 11.

**FIG. 1A**

**FIG. 1B**

**FIG. 1C**

Histogram of Source Distance from Microphone

Density of Sources in 2D

**FIG. 2A**

**FIG. 2B**

EP 4 548 345 B1

300

| # near sources | Distance-based | | Separate-all | | (#) |
|---|---|---|---|---|---|
| | Near | Far | Near | Far | |
| 1 | **4.4** | **6.8** | 2.5 | 3.9 | (372) |
| 2 | **2.2** | **7.1** | 0.4 | 4.7 | (248) |
| 3 | **-0.3** | **6.7** | -2.1 | 4.9 | (92) |
| 4 | **-2.6** | 5.5 | -6.6 | **5.7** | (15) |

## FIG. 3

400

| Distance (m) | SI-SDRi, 1 near source | | Noise reduction |
|---|---|---|---|
| | Near | Far | |
| 0.8 | 4.0 | 8.3 | 63.9 |
| 1.5 | 4.4 | 6.8 | 48.9 |
| 3.0 | 1.9 | 2.7 | 22.8 |

## FIG. 4

**500A**

**500B**

Near Target (1 near source)

Far Target (1 near source)

SI-SDR improvement (dB)

## FIG. 5

**600A**

**600B**

Near Target (2 near sources)

Far Target (2 near sources)

## FIG. 6

**700A**

Near Target (3 near sources)

**700B**

Far Target (3 near sources)

Near Input SI-SDR (dB)

Far Input SI-SDR (dB)

## FIG. 7

**800A**

Near Target (4 near sources)

**800B**

Far Target (4 near sources)

Near Input SI-SDR (dB)

Far Input SI-SDR (dB)

## FIG. 8

EP 4 548 345 B1

900A

| Model SPP | Eval SPP | SI-SDRi all non-silent | | Noise reduction |
|---|---|---|---|---|
| | | Near | Far | |
| 0.5 | 1 | 2.9 | 6.8 | 48.9 |
| 0.5 | 0.5 | 3.2 | 9.6 | 56.3 |
| 1 | 1 | 3.4 | 7.2 | 40.6 |
| 1 | 0.5 | 2.8 | 2.6 | 46.8 |

**FIG. 9A**

900B

| SPP | % rooms silent target | SI-SDRi | | Noise reduction |
|---|---|---|---|---|
| | | Near | Far | |
| 1.0 | 0 | 6.7 | 7.8 | 23.7 |
| 1.0 | 30 | 5.0 | 6.9 | 40.6 |
| 0.5 | 0 | 4.6 | 6.5 | 35.4 |
| 0.5 | 30 | 4.4 | 6.8 | 48.9 |

**FIG. 9B**

**FIG. 10**

EP 4 548 345 B1

**1100A**

Predicted SNR for RoomSim Data

## FIG. 11A

**1100B**

T60 Model Performance (TF2/Keras Model)

## FIG. 11B

**1100C**

DRR Model Performance (TF2/Keras Model)

**FIG. 11C**

**1100D**

Distance Model Performance (TF2/Keras Model)

**FIG. 11D**

1200

**Training Phase 1202**

Feedback
1260

Training Data 1210

Machine Learning Algorithm(s) 1220

Trained Machine Learning Model(s) 1232

Input Data 1230

Inference(s) and/or Prediction(s) 1250

Inference/Prediction Request(s) 1240

**Inference Phase 1204**

FIG. 12

1300

Programmable
Device
1304a

Server
Device
1310

Programmable
Device
1304b

Network
1306

Server
Device
1308

Programmable
Device
1304c

Programmable
Device
1304d

Programmable
Device
1304e

**FIG. 13**

Computing Device 1400

1405

User Interface Module
1401

One or More Processors
1403

Network Communications
Module 1402

Wireless Interface(s)
1407

Wireline Interface(s)
1408

Data Storage 1404

Computer-Readable
Instructions 1406

Trained Neural Network
Model 1410

Camera(s) 1412

Sensor(s) 1414

Power System 1416

One or
More
Batteries
1418

External
Power
Interface(s)
1420

FIG. 14

**FIG. 15**

1600

**1610** Receiving, synthetic training data comprising a plurality of audio mixtures, wherein each audio mixture comprises respective one or more first sounds that are proximate to a respective audio input component receiving the audio mixture, and respective one or more second sounds that are not proximate to the respective audio input component, the synthetic training data having been generated by an acoustic simulator to capture acoustic characteristics that vary based on a respective distance from the respective audio input component

**1630** Training, based on the training data, a neural network to predict one or more near sounds and one or more far sounds in a particular audio mixture received by a particular audio input component, wherein the one or more near sounds correspond to first sources that are proximate to the particular audio input component, and the one or more far sounds correspond to second sources that are not proximate to the particular audio input component, wherein the predicting is based on particular acoustic characteristics of the particular audio mixture

**1640** Providing, by the computing device, the trained neural network

# FIG. 16

~1700

**1710** Receiving, by an audio input component of a computing device, an audio mixture from one or more sources

**1720** Predicting, by a trained neural network, one or more near sounds and one or more far sounds from the audio mixture, wherein the one or more near sounds correspond to first sources that are proximate to the audio input component, and the one or more far sounds correspond to second sources that are not proximate to the audio input component, wherein the predicting is based on acoustic characteristics of the received audio mixture, the neural network having been trained on training data comprising a plurality of audio mixtures, wherein a given audio mixture of the plurality of audio mixtures comprises respective one or more first sounds that are proximate to a respective audio input component receiving the given audio mixture, and respective one or more second sounds that are not proximate to the respective audio input component, the synthetic training data having been generated by an acoustic simulator to capture acoustic characteristics that vary based on a respective distance from the respective audio input component

**1730** Providing, by the computing device, the predicted one or more near sounds

# FIG. 17

**EP 4 548 345 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2021219048 A1

### Non-patent literature cited in the description

- Distance-Based Sound Separation. **KATHARINE PATTERSON et al.** ARXIV.ORG. CORNELL UNIVERSITY LIBRARY, 01 July 2022

- **NISHIGUCHI SOTA et al.** *DNN-Based Near- and Far-Field Source Separation Using Spherical-Harmonic-Analysis-Based Acoustic Features*